# EUROPÄISCHE PATENTSCHRIFT

(11) **EP 2 891 601 B1**
(45) Veröffentlichungstag und Bekanntmachung des Hinweises auf die Patenterteilung: **07.09.2016**
(21) Anmeldenummer: 14004203.7
(22) Anmeldetag: 12.12.2014
(51) Int. Cl.: B62M 9/1248, B62M 9/16

(54) **Fahrradderailleur mit Reibungsdämpfung**
Bicycle derailleur with friction damping
Dérailleur de vélo à amortisseur à friction

(30) Priorität: 23.12.2013 DE 102013227071
(43) Veröffentlichungstag der Anmeldung: 08.07.2015
(73) Patentinhaber: SRAM Deutschland GmbH, 97424 Schweinfurt (DE)
(72) Erfinder: Chang, Jih-Hung, 42141 Taichung City (TW)

(56) Entgegenhaltungen:
- DE-A1-102007 040 156
- DE-U1-202007 019 470
- US-A1- 2013 203 532

## Beschreibung

Die Erfindung betrifft allgemein einen Fahrradderailleur oder Fahrradumwerfer, genauer einen hinteren Fahrradumwerfer, umfassend: ein Basiselement, welches an einem Fahrradrahmen in Zuordnung zu einem hinteren Fahrrad-Laufrad des Fahrrads montierbar ist; ein bewegliches Element, welches mit dem Basiselement beweglich gekoppelt ist; eine Kettenführungsbaugruppe, die um eine Drehachse drehbar mit dem beweglichen Element verbunden ist; eine der Kettenführungsbaugruppe zugeordnete elastische Kraftspeichereinrichtung, mittels der die Kettenführungsbaugruppe in eine erste Drehrichtung relativ zu dem beweglichen Element vorspannbar ist; und eine Gegenkrafterzeugungseinrichtung, welche eine Freilaufkupplungseinrichtung sowie eine Reibeinrichtung und eine der Reibeinrichtung zugeordnete oder zugehörige elastische Kraftspeichereinrichtung umfasst und mittels der auf die Kettenführungsbaugruppe eine einer Drehung in einer der ersten Drehrichtung entgegengesetzten zweiten Drehrichtung relativ zu dem beweglichen Element entgegenwirkende Gegenkraft ausübbar ist.

Bekanntlich dient ein Derailleur oder Umwerfer einer Fahrradkettenschaltung zum Durchführen von Schaltvorgängen durch Umwerfen der Kette zwischen mehreren benachbarten Ritzeln eines Ritzelsatzes des Fahrrads. Eine weitere, ebenfalls sehr wichtige Funktion des Derailleurs ist die Gewährleistung einer ausreichenden Kettenspannung. Ein Fahrradderailleur hat hierzu regelmäßig den folgenden Aufbau. Es ist ein Basiselement vorgesehen, mit dem der Fahrradderailleur an dem Fahrrad montiert wird. Ferner gibt es ein bewegliches Element, welches beweglich an das Basiselement gekoppelt ist, und eine Kettenführung, die an das bewegliche Element zur Rotation bezüglich einer Rotationsachse beweglich gekoppelt ist. Das bewegliche Element ist in seitlicher (axialer) Richtung beweglich, um die Kettenführung zwischen den Ritzeln des Ritzelsatzes zu bewegen, so dass die Kette von einem Ausgangsritzel zu einem Zielritzel überführt werden kann. Die Kettenführung ist durch eine Spannfeder oder dergleichen elastisch in einer Rotationsrichtung vorgespannt, nämlich in Richtung einer Spannung der mittels der Kettenführung geführten Kette des Fahrrads, um die Kette im gespannten Zustand zu halten bzw. den gespannten Zustand nach vorangehendem Zustand der ungenügenden Kettenspannung wieder herzustellen. Diese Rotations- oder Schwenkrichtung wird hier auch als "Kettenspannrichtung" angesprochen. Eine Verdrehung der Kettenführung in dieser Richtung erhöht die Kettenspannung und verringert gleichzeitig die Spannung der auf die Kettenführung wirkenden Spannfeder.

Je nach momentanem Ritzel des Ritzelsatzes, mit dem die Kette zu einem gegebenen Zeitpunkt eingreift, wird die Kettenführung unterschiedliche Schwenkpositionen relativ zum beweglichen Element bezüglich der Rotationsachse einnehmen.

Einwirkungen auf die Kette und die Kettenführung ergeben sich nicht nur aus dem Schalten der Kettenschaltung durch Überführung der Kette zwischen verschiedenen Ritzeln des Ritzelsatzes, sondern auch aus dem Fahrbetrieb selbst. So sind der Derailleur und die Kette etwa beim Fahren auf unebenem Gelände Schlägen und Erschütterungen ausgesetzt, die auf die Kettenführung in einer zur "Kettenspannrichtung" entgegengesetzten Schwenkrichtung wirken können. Eine Verdrehung der Kettenführung in dieser zur "Kettenspannrichtung" entgegengesetzten Richtung vergrößert die Spannung der auf die Kettenführung wirkenden Spannfeder und führt unmittelbar zu einer Reduzierung der Kettenspannung (etwa wenn eine unmittelbare Einwirkung auf die Kettenführung diese in dieser Richtung verdreht) oder zumindest zu einer erheblichen Gefahr einer nachfolgenden Reduzierung der Kettenspannung unter das notwendige Maß. Negative Folge können Spannungsabfälle der Kette mit unerwünschtem Spiel bzw. "Schlackern" der Kette sein, im Extremfall hin bis zu einem Abspringen der Kette von dem Ritzelsatz.

Um solchen Problemen zu begegnen, sind herkömmliche Lösungen mit einer Gegenkrafterzeugungseinrichtung ausgeführt, welche auch als Dämpfer, Dämpfungseinrichtung oder Dämpferbaugruppe angesprochen werden kann und einen Widerstand bereitstellt bezüglich der Rotationsbewegung der Kettenführung, und zwar nur in der zur "Kettenspannrichtung" entgegengesetzten Drehrichtung der Kettenführung. Hierzu weisen diese bekannten Lösungen jeweils eine Freilaufkupplungseinrichtung und eine Reibeinrichtung auf, welche so zusammenwirken, dass der Widerstand bezüglich einer Rotationsbewegung der Kettenführung in der der "Kettenspannrichtung" entgegengesetzten Drehrichtung bewirkt wird.

Das bewegliche Element und die Kettenführung sind relativ zueinander verdrehbar, stehen aber über die Reibeinrichtung und die auch als Einwegkupplung ansprechbare Freilaufkupplungseinrichtung in reibschlüssiger Drehmitnahmeverbindung, die aufgrund der Einwegkupplungseigenschaft der Einwegkupplung nur für die der "Kettenspannrichtung" entgegengesetzten Drehrichtung wirksam ist, so dass nur in dieser Drehrichtung der Drehung entgegenwirkende Gleitreibung auftritt. In der anderen, einer Rückdrehung der Kettenführung im Sinne eines Spannens der Kette entsprechenden Drehrichtung ist die Kettenführung aufgrund dieser Einwegkupplungseigenschaft von dem bewegbaren Element entkoppelt, so dass dem Spannen der Kette durch Drehung der Kettenführung kein Widerstand oder zumindest kein wesentlicher entgegenwirkt.

Ein Umwerfer wie angesprochen ist beispielsweise aus der DE 10 2007 040 156 A1 bekannt. Dokument DE 102007 040156 A1 offenbart die Präambel von Anspruch 1. Der bekannte Umwerfer weist eine Gegenkrafterzeugungseinrichtung mit einer Reibeinrichtung gebildet von einer Mehrzahl von axial gestützten Reibplatten auf. Als Freilaufkupplungseinrichtung ist eine Rollenkupplung radial außerhalb dieser Reibplatten im gleichen Axialbereich angeordnet, was zur Folge hat, dass relativ große radiale Abmessungen für das bewegliche Element in radialer Richtung erforderlich sind. Als Vorteil dieser bekannten Lösung wird in der Offenlegungsschrift eine Einstelleinheit mit einer frei liegenden Einzelmutter zum Einstellen des Reibeingriffs und damit der Gegenkraft herausgestellt, die es ermöglichen soll, dass die Gegenkraft so eingestellt werden kann, wie es der Fahrer bevorzugt. Zu einer solchen Einstellung wird aber ein Werkzeug benötigt werden und es stellt sich die Frage, ob ein normaler Fahrer überhaupt kompetent genug ist, die richtige Gegenkraft einzustellen, so dass in der Praxis durchaus Probleme zu befürchten sind. Es gibt auch keine Sicherungsmaßnahmen gegen eine ungewünschte Verstellung, was aufgrund der frei liegenden, gegen eine Verdrehung nicht gesicherten Mutter zu befürchten ist.

Auch aus der DE 10 2011 114 699 A1 sind hintere Fahrradumwerfer der angesprochenen Art in verschiedenen Varianten bekannt, die ebenfalls eine Rollenkupplung verwenden. Als ein inneres Kupplungselement der Rollenkupplung dient ein Abschnitt einer Drehwelle, mit der die Kettenführungsbaugruppe drehbar relativ zum beweglichen Element gelagert ist. Die Reibeinrichtung ist von einer das äußere Kupplungselement der Rollenkupplung umschlingenden Blattfeder gebildet, die mit zwei Endabschnitten radial zwischen zwei Drehnocken oder alternativ zwischen eine Einstellschraube und eine Drehnocke vorstehen, die zum Einstellen einer Grundreibung und zum Steuern einer momentan wirkenden Reibung mittels eines Steuerhebels oder dergleichen dienen, damit der Radfahrer seinen Wünschen entsprechend, beispielsweise geländeabhängig, die momentan wirksame Reibung und damit die momentan wirksame Gegenkraft mittels des zwischen zwei Indexstellungen bewegbaren Steuerhebels wählen kann. Um den Radfahrer diese Wählbarkeit zu geben, wird ein recht hoher mechanischer Aufwand getrieben.

Aus der DE 10 2013 001 952 A1 sind hintere Fahrradumwerfer der angesprochenen Art in verschiedenen Varianten bekannt, bei denen die Reibeinrichtung ein hülsenartiges, sich rings um eine Rollenkupplung erstreckendes Reibungselement mit sich verjüngender oder konischer Außenoberfläche umfasst, wobei das innere Element der Rollenkupplung von einem Abschnitt der die Kettenführungsbaugruppe drehbar lagernden Drehwelle gebildet sein kann.

Die EP 0 031 215 B1 offenbart verschiedene Varianten eines hinteren Fahrradumwerfers der angesprochenen Art, der eine Klinkenkupplung als Freilaufkupplungseinrichtung aufweist, die zusammen mit einer axial gerichtete Reibflächen aufweisenden Reibeinrichtung die Gegenkrafterzeugungseinrichtung bildet.

Es ist eine Aufgabe der Erfindung, einen hinteren Fahrradumwerfer der angesprochenen Art anzugeben, der hinsichtlich des beweglichen Elements kompakt, insbesondere in radialer Richtung kompakt, ausgeführt sein kann.

Zur Lösung dieser Aufgabe wird ein hinterer Fahrradumwerfer bereitgestellt, der umfasst: ein Basiselement, welches an einem Fahrradrahmen in Zuordnung zu einem hinteren Fahrrad-Laufrad des Fahrrads montierbar ist; ein bewegliches Element, welches mit dem Basiselement beweglich gekoppelt ist; eine Kettenführungsbaugruppe, die um eine Drehachse drehbar mit dem beweglichen Element verbunden ist; eine der Kettenführungsbaugruppe zugeordnete elastische Kraftspeichereinrichtung, mittels der die Kettenführungsbaugruppe in eine erste Drehrichtung relativ zu dem beweglichen Element vorspannbar ist; und eine Gegenkrafterzeugungseinrichtung, welche eine Freilaufkupplungseinrichtung sowie eine Reibeinrichtung und eine der Reibeinrichtung zugeordnete oder zugehörige elastische Kraftspeichereinrichtung umfasst und mittels der auf die Kettenführungsbaugruppe eine einer Drehung in einer der ersten Drehrichtung entgegengesetzten zweiten Drehrichtung relativ zu dem beweglichen Element entgegenwirkende Gegenkraft ausübbar ist; wobei die Freilaufkupplungseinrichtung eine Rollenkupplung aufweist und die Reibeinrichtung in gegenseitigem Reibeingriff stehende oder in gegenseitigen Reibeingriff bringbare, bezogen auf die Drehachse im wesentlichen axial gerichtete Reibflächen aufweist, die mittels der der Reibeinrichtung zugeordneten oder zugehörigen elastischen Kraftspeichereinrichtung gegeneinander vorgespannt oder vorspannbar sind. Erfindungsgemäß ist vorgesehen, dass die Reibflächen bezogen auf die Drehachse gegenüber zwischen einem radial inneren Kupplungselement und einem radial äußeren Kupplungselement der Rollenkupplung wirksamen Rollelementen der Rollenkupplung axial versetzt sind.

Der Erfindungsvorschlag eröffnet viele Möglichkeiten für vorteilhafte Ausgestaltungen des Fahrradumwerfers. So kann man vorsehen, dass ein radialer Erstreckungsbereich der Rollenkupplung, vorzugsweise zumindest ein axialer Erstreckungsbereich der Rollelemente, sich mit einem radialen Erstreckungsbereich der Reibflächen überlappt, wodurch die angesprochene radiale Kompaktheit ermöglicht wird. Man kann in diesem Zusammenhang auch vorsehen, dass die Reibflächen sich mit einem von dem inneren Kupplungselement und dem äußeren Kupplungselement bezogen auf die Drehachse radial überlappend angeordnet sind.

Obwohl grundsätzlich andere Konstruktionen denkbar sind, wird ein erfindungsgemäßer hinterer Fahrradumwerfer typischerweise die Kettenführungsbaugruppe mittels einer Drehwelle drehbar lagern. Hierzu wird speziell vorgeschlagen, dass die Kettenführungsbaugruppe mittels einer im beweglichen Element um die Drehachse drehbar gelagerten, gewünschtenfalls das innere Kupplungselement der Rollenkupplung bildenden Drehwelle mit dem beweglichen Element verbunden ist.

Vorteilhaft kann man vorsehen, dass die Drehwelle in einer gestuft ausgeführten, als Durchgang zwischen entgegengesetzten axialen Seiten des beweglichen Elements ausgeführten Aussparung drehbar gelagert ist und vermittels wenigstens einer sich in radialer Richtung erstreckenden, mit der Drehwelle einteiligen oder daran fixierten Abstützformation axial in Bezug auf wenigstens eine axiale Richtung direkt oder indirekt an einer zugeordneten Abstützformation des beweglichen Elements abgestützt ist. Es wird in diesem Zusammenhang speziell daran gedacht, dass die Drehwelle mittels einer im Abstand von der Kettenführungsbaugruppe vorgesehenen, mit der Drehwelle einteiligen oder daran festgelegten Abstützformation an dem beweglichen Element in Bezug auf eine erste axiale Richtung axial abgestützt ist, gewünschtenfalls vermittels wenigstens eines gegenüber dem beweglichen Element gesonderten, in die Aussparung aufgenommenen Abstützelements. Weiterbildend wird vorgeschlagen, dass die vorzugsweise mit der Drehwelle einteilige, beispielsweise als Flanschabschnitt ausgeführte Abstützformation in einem von der Kettenführungsbaugruppe fernen axialen Endbereich der Drehwelle vorgesehen ist.

Bezug nehmend auf den angesprochenen grundlegenden Erfindungsvorschlag wird weiterbildend auch vorgeschlagen, dass die Reibflächen bezogen auf die Drehachse gegenüber wenigstens einem von dem inneren Kupplungselement und dem äußeren Kupplungselement axial versetzt sind.

Vorteilhaft kann man vorsehen, dass ein Element der Kettenführungsbaugruppe als Abstützformation zum axialen Abstützen der Drehwelle an dem beweglichen Element in Bezug auf eine axiale Richtung, insbesondere in Bezug auf eine zur ersten axialen Richtung entgegengesetzte zweite axiale Richtung, dient.

Eine besonders bevorzugte Ausgestaltung der Reibeinrichtung zeichnet sich dadurch aus, dass die Reibflächen erste Reibflächen umfassen, die mittels der der Reibeinrichtung zugeordneten oder zugehörigen elastischen Kraftspeichereinrichtung gegeneinander vorspannbar sind, dass die Reibflächen gegenüber den ersten Reibflächen der Kettenführungsbaugruppe näher benachbarte zweite Reibflächen umfassen, die mittels der der Reibeinrichtung zugeordneten oder zugehörigen elastischen Kraftspeichereinrichtung gegeneinander vorspannbar sind, und dass die Rollelemente der Rollenkupplung bezogen auf die Drehachse axial zwischen einerseits den ersten Reibflächen und anderseits den zweiten Reibflächen angeordnet sind. Man kann die Reibeinrichtung also axial verteilt ausführen und hierbei axiale Bereiche auf beiden axialen Seiten der Rollelement der Rollenkupplung einbeziehen, wodurch der zur Verfügung stehende axiale Bauraum gut ausgenutzt werden kann, und dementsprechend auch eine besondere axiale Kompaktheit für das bewegliche Element erreicht werden kann.

Man kann vorsehen, dass den ersten Reibflächen und den zweiten Reibflächen gesonderte Kraftspeicher zugeordnet sind, die gemeinsam die angesprochene elastische Kraftspeichereinrichtung bilden. Es wird also daran gedacht, dass die der Reibeinrichtung zugeordnete oder zugehörige Kraftspeichereinrichtung einen ersten elastischen Kraftspeicher und einen zweiten elastischen Kraftspeicher umfasst, wobei die Rollelemente der Rollenkupplung bezogen auf die Drehachse axial zwischen einerseits dem ersten Kraftspeicher und andererseits dem zweiten Kraftspeicher angeordnet sind.

Demgegenüber ist es aber bevorzugt, dass die der Reibeinrichtung zugeordnete oder zugehörige elastische Kraftspeichereinrichtung in enger Nachbarschaft zu den ersten Reibflächen angeordnet ist und vermittels einer Kraftübertragungseinrichtung auf die zweiten Reibflächen wirkt, oder dass die der Reibeinrichtung zugeordnete oder zugehörige elastische Kraftspeichereinrichtung in enger Nachbarschaft zu den zweiten Reibflächen angeordnet ist und vermittels einer Kraftübertragungseinrichtung auf die ersten Reibfläche wirkt. Auch wenn es überraschen mag, kann man den Fahrradumwerfer problemlos mit einer den ersten und den zweiten Reibflächen gemeinsam zugeordneten elastischen Kraftspeichereinrichtung auszuführen, die in enger Nachbarschaft zu entweder den ersten oder den zweiten Reibflächen angeordnet ist, aber sowohl den ersten als auch den zweiten Reibflächen zugeordnet ist und direkt oder indirekt auf diese wirkt, was zu einer axialen Kompaktheit beiträgt. Betreffend die Kraftübertragungseinrichtung wird weiterbildend vorgeschlagen, dass eines von dem inneren Kupplungselement und dem äußeren Kupplungselement die Kraftübertragungseinrichtung bildet oder dieser zugehörig ist oder/und dass wenigstens ein sich radial innerhalb oder radial außerhalb der Rollenkupplung axial erstreckendes und gegenüber dem inneren Kupplungselement und dem äußeren Kupplungselement gesondertes Abstützelement die Kraftübertragungseinrichtung bildet oder dieser zugehörig ist. Man kommt somit ohne zusätzliche Komponenten aus oder kann ein gesondertes Abstützelement vorsehen, welches beispielsweise als Hülsenelement oder dergleichen ausgeführt ist, welches im Bereich der Rollenkupplung wenig radialen Bauraum einnehmen kann.

Eine andere vorteilhafte Möglichkeit betreffend die Reibflächen ist, dass die Reibflächen bezogen auf eine die Rollenkupplung schneidende, zur Drehachse orthogonale Bezugsebene auf einer axialen Seite der Bezugsebene angeordnet sind, vorzugsweise axial versetzt gegenüber den Rollelementen der Rollenkupplung, höchstvorzugsweise axial versetzt gegenüber der Rollenkupplung. In diesem Zusammenhang wird beispielsweise daran gedacht, dass die Reibflächen auf der der Kettenführungsbaugruppe näheren axialen Seite der Bezugsebene angeordnet sind. Vorzugsweise ist die der Reibeinrichtung zugeordnete oder zugehörige elastische Kraftspeicheranordnung in enger Nachbarschaft zu den Reibflächen auf der gleichen axialen Seite der Bezugsebene angeordnet.

Bevorzugte, nicht nur im Zusammenhang mit der Realisierung der angesprochenen Kraftübertragungseinrichtung relevante Ausführungsformen zeichnen sich aus durch wenigstens ein die Rollenkupplung radial außen umschließendes, mit dem äußeren Kupplungselement zur gemeinsamen Drehung gekoppeltes oder koppelbares und gewünschtenfalls als Abstützelement der Kraftübertragungseinrichtung dienendes Hülsenelement oder/und zeichnen sich aus durch wenigstens ein die Drehwelle radial umschließendes, mit der Drehwelle gewünschtenfalls zur gemeinsamen Drehung gekoppeltes oder koppelbares Hülsenelement, welches von der Rollenkupplung radial außen umschlossen wird und gewünschtenfalls als Abstützelement der Kraftübertragungseinrichtung dient oder welches das innere Kupplungselement der Rollenkupplung bildet.

Zur Bereitstellung von axialen gerichteten Reibflächen kann man vorsehen, dass eines der Kupplungselemente der Rollenkupplung oder ein/das die Rollenkupplung oder die Drehwelle radial außen umschließendes Hülsenelement einen eine Reibfläche der axial gerichteten Reibflächen bzw. der ersten oder zweiten Reibflächen bildenden Endabschnitt aufweist. Im Falle des angesprochenen Hülsenelements kann es sich um ein Hülsenelement der angesprochenen Kraftübertragungseinrichtung handeln. Zur Bereitstellung von axial gerichteten Reibflächen hinreichenden Flächeninhalts bietet es sich an, den Endabschnitt des betreffenden Kupplungselements oder des Hülsenelements als Flanschabschnitt auszuführen. Vorteilhaft kann man zwei derartige Hülsenelemente vorsehen, deren Flanschabschnitte vom jeweils anderen Hülsenelement entfernt angeordnet sind. Es reicht aber ohne weiteres auch nur ein einziges derartiges Hülsenelement aus.

Zur Ausgestaltungsmöglichkeit mit nur einem Hülsenelement wird weiterbildend vorgeschlagen, dass das die Drehwelle radial außen umschließende Hülsenelement an einem zu dem die Reibfläche bildenden Endabschnitt entgegengesetzten Endabschnitt an einer Abstützformation der Drehwelle axial abgestützt ist, wobei diese Abstützformation vorzugsweise auch zum direkten oder indirekten axialen Abstützen der Drehwelle an dem beweglichen Element dient.

Bevorzugte Ausführungsformen zeichnen sich dadurch aus, dass wenigstens eine drehfest im beweglichen Element festgelegte oder festlegbare Scheibe oder Ringscheibe oder/und wenigstens eine innere Fläche des beweglichen Elements eine Reibfläche der axial gerichteten Reibflächen bzw. der ersten oder zweiten Reibflächen bildet oder dass wenigstens eine mit der Drehwelle zur gemeinsamen Drehung gekoppelte oder koppelbare Scheibe oder Ringscheibe oder/und wenigstens eine Fläche eines radial vorstehenden Abschnitts der Drehwelle eine Reibfläche der axial gerichteten Reibflächen bzw. der ersten oder zweiten Reibflächen bildet.

Weiterbildend wird vorgeschlagen, dass wenigstens eine festgelegte Scheibe oder Ringscheibe oder wenigstens eine solche festlegbare Scheibe oder Ringscheibe im Falle des Zustands der Festlegung relativ zum beweglichen Element bzw. relativ zur Drehwelle axial verschiebbar ist, im Hinblick auf die Vorspannung der Reibflächen in den gegenseitigen Reibeingriff durch die der Reibeinrichtung zugeordnete bzw. zugehörige elastische Kraftspeichereinrichtung.

Das äußere Kupplungselement kann drehfest oder vermittels der Reibflächen reibschlüssig mit dem beweglichen Element gekoppelt sein. Die Drehwelle kann das innere Kupplungselement bilden, oder drehfest oder vermittels der Reibflächen reibschlüssig mit diesem gekoppelt sein. In diesem Zusammenhang wird speziell daran gedacht, dass das innere Kupplungselement von wenigstens einem Hülsenelement gebildet ist.

Es wird speziell an die folgenden Varianten gedacht:
i) das äußere Kupplungselement ist vermittels der Reibflächen reibschlüssig mit dem beweglichen Element gekoppelt und die Drehwelle bildet das innere Kupplungselement oder ist drehfest mit diesem verbunden,
ii) das äußere Kupplungselement ist drehfest mit dem beweglichen Element gekoppelt und die Drehwelle ist vermittels der Reibflächen reibschlüssig mit dem inneren Kupplungselement verbunden.

Man kann vorsehen, dass strukturell unveränderbare, auch bei der Fertigung nicht einstellbare Strukturen des Fahrradumwerfers einen definierten Spannungszustand der der Reibeinrichtung zugeordneten oder zugehörigen elastischen Kraftspeichereinrichtung bewirken. Demgegenüber ist es aber bevorzugt, dass ein definierter Spannungszustand der der Reibeinrichtung zugeordneten oder zugehörigen, vorzugsweise als Wellfeder- oder Tellerfederanordnung ausgeführten elastischen Kraftspeichereinrichtung bei der Herstellung des Fahrradumwerfers mittels eines axial relativ zu wenigstens einem von dem beweglichen Element und der Drehwelle definiert innerhalb eines vorgegebenen axialen Einstellbereichs positionierbaren, axial abstützbaren Abstützelements eingestellt ist, vorzugsweise in Form eines beispielsweise als Schraubelement ausgeführten Einstellelements. Somit kann der Fahrradumwerfer bei der Fertigung in der Fabrik hinsichtlich der vorzusehenden Gegenkraft der Gegenkrafterzeugungseinrichtung justiert oder kalibriert werden, so dass Streuung in der Serie vermieden wird und auch keine besonders engen Toleranzen für die den Fahrradumwerfer bildenden Bauteile gefordert werden müssen.

Eine Gruppe von Ausführungsformen zeichnet sich dadurch aus, dass die der Reibeinrichtung zugeordnete oder zugehörige elastische Kraftspeichereinrichtung axial zwischen einerseits der Kettenführungsbaugruppe und andererseits dem Abstützelement, insbesondere Einstellelement, angeordnet ist, und dabei vorzugsweise axial zwischen einerseits der Rollenkupplung und andererseits dem Abstützelement, insbesondere Einstellelement, angeordnet ist.

Eine Gruppe von Ausführungsformen zeichnet sich dadurch aus, dass das Abstützelement, insbesondere Einstellelement, axial zwischen einerseits der Kettenführungsbaugruppe und andererseits der Rollenkupplung angeordnet ist. Hierzu besteht einerseits die Möglichkeit, dass die der Reibeinrichtung zugeordnete oder zugehörige elastische Kraftspeichereinrichtung axial zwischen einerseits der Rollenkupplung und andererseits dem Abstützelement, insbesondere Einstellelement, angeordnet ist. Andererseits kann man vorsehen, dass die Rollenkupplung axial zwischen einerseits der der Reibeinrichtung zugeordneten oder zugehörigen elastischen Kraftspeichereinrichtung und andererseits dem Abstützelement, insbesondere Einstellelement, angeordnet ist.

Allgemein wird daran gedacht, dass das Abstützelement als Einstellelement ausgeführt ist und an einem Außengewinde mit einem Innengewinde des beweglichen Elements oder an einem Innengewinde mit einem Außengewinde der Drehwelle in Eingriff steht. Bevorzugt ist vorgesehen, dass das Abstützelement bzw. Einstellelement gegen Verstellung gesichert oder/und verborgen und vorzugsweise unzugänglich angeordnet ist. Im Hinblick auf die Gefahr von Fehleinstellungen durch einen Radfahrer oder auch durch einen Monteur in einer Fahrradwerkstatt ist eine Änderung einer fabrikseitigen Einstellung des Spannungszustands und damit der Gegenkraft nicht erwünscht und soll erschwert oder idealerweise sogar praktisch unmöglich gemacht werden.

Betreffend die der Kettenführungsbaugruppe zugeordnete elastische Kraftspeichereinrichtung wird vorgeschlagen, dass diese bezogen auf die Drehachse radial außerhalb eines radialen Erstreckungsbereichs der Reibflächen und sich mit zumindest einigen der Reibflächen, vorzugsweise den zweiten Reibflächen, oder/und dem Abstützelement bzw. Einstellelement oder/und der der Reibeinrichtung zugeordneten oder zugehörigen elastischen Kraftspeichereinrichtung axial überlappend und dieses bzw. diese radial umschließend angeordnet ist.

Die Erfindung stellt auch eine Vormontageeinheit zur Fertigung eines erfindungsgemäßen hinteren Fahrradumwerfers in verschiedenen Varianten bereit. Eine erste Variante zeichnet sich dadurch aus, dass die Vormontageeinheit umfasst: ein bewegliches Element, welches mit einem Basiselement beweglich gekoppelt oder koppelbar ist; eine Drehwelle, die mit einer Kettenführungsbaugruppe verbindbar ist und um eine Drehachse drehbar in einer gestuft ausgeführten, als Durchgang zwischen entgegengesetzten axialen Seiten des beweglichen Elements ausgeführten Aussparung des beweglichen Elements gelagert und in einer ersten der axialen Richtungen durch das bewegliche Element axial abgestützt oder abstützbar ist, gewünschtenfalls unter Vermittlung wenigstens eines in die Aussparung aufgenommenen Abstützelements; eine Freilaufkupplungseinrichtung und eine Reibeinrichtung, die in der Aussparung die Drehwelle radial umschließend und gewünschtenfalls die Drehwelle als Kupplungselement der Freilaufkupplungseinrichtung einbeziehend angeordnet sind und mit denen unter Einbeziehung einer der Reibeinrichtung zugeordneten elastischen Kraftspeichereinrichtung eine Gegenkrafterzeugungseinrichtung bildbar ist, wobei die Freilaufkupplungseinrichtung eine Rollenkupplung aufweist und die Reibeinrichtung in gegenseitigem Reibeingriff stehende oder in gegenseitigen Reibeingriff bringbare, bezogen auf die Drehachse im Wesentlichen axial gerichtete Reibflächen aufweist, die bezogen auf die Drehachse gegenüber zwischen einem radial inneren Kupplungselement und einem radial äußeren Kupplungselement der Rollenkupplung wirksamen Rollelementen der Rollenkupplung axial versetzt sind.

Weiter wird in diesem Zusammenhang, also betreffend die erste Variante vorgeschlagen, dass die Drehwelle an einem ersten axialen Ende mit der Kettenführungsbaugruppe, vorzugsweise unter Erzielung einer mittelbaren axialen Abstützung oder Abstützbarkeit für die Drehwelle in einer der ersten axialen Richtung entgegengesetzten zweiten axialen Richtung, verbind bar ist und in Nachbarschaft zu einem zu dem ersten Ende entgegengesetzten zweiten Ende der Drehwelle in der Aussparung die elastische Kraftspeichereinrichtung positionierbar und durch ein in der Aussparung definiert positionierbares und axial festlegbares, beispielsweise mit einem Außengewinde in ein Innengewinde der Aussparung einschraubbares, Einstellelement spannbar ist, um die Reibflächen in den gegenseitigen Reibeingriff zu spannen.

Eine zweite Variante zeichnet sich dadurch aus, dass die Vormontageeinheit umfasst: ein bewegliches Element, welches mit einem Basiselement beweglich gekoppelt oder koppelbar ist und eine gestuft ausgeführte Aussparung aufweist, die als Durchgang zwischen bezogen auf eine Achse entgegengesetzten axialen Seiten des beweglichen Elements ausgeführt ist und in der eine mit einer Kettenführungsbaugruppe verbindbare Drehwelle um eine der Achse entsprechende Drehachse drehbar gelagert oder lagerbar und in einer ersten der axialen Richtungen durch das bewegliche Element axial abgestützt oder abstützbar ist, gewünschtenfalls unter Vermittlung wenigstens eines in die Aussparung aufgenommenen Abstützelements; eine Freilaufkupplungseinrichtung oder zumindest eine Teileinrichtung der Freilaufkupplungseinrichtung sowie eine Reibeinrichtung mit einer der Reibeinrichtung zugeordneten oder zugehörigen elastischen Kraftspeichereinrichtung, die in der Aussparung einen radial innen liegenden Durchgang für die gewünschtenfalls als Kupplungselement der Freilaufkupplungseinrichtung einzubeziehende oder einbezogene, in die Aussparung einschiebbare oder eingeschobene Drehwelle freilassend angeordnet sind, zum Bilden einer Gegenkrafterzeugungseinrichtung, wobei die Freilaufkupplungseinrichtung bzw. die Teileinrichtung eine Rollenkupplung bzw. zumindest ein äußeres Kupplungselement der Rollenkupplung mit daran radial innen gehaltenen Rollelementen umfasst und die Reibeinrichtung in gegenseitigem Reibeingriff stehende oder in gegenseitigen Reibeingriff bringbare, bezogen auf die Drehachse im Wesentlichen axial gerichtete Reibflächen aufweist, die mittels der der Reibeinrichtung zugehörigen oder zugeordneten elastischen Kraftspeichereinrichtung gegeneinander vorspannbar sind, wobei die Reibflächen bezogen auf die Drehachse gegenüber zwischen einem radial inneren Kupplungselement und einem radial äußeren Kupplungselement der Rollenkupplung wirksamen Rollelementen der Rollenkupplung axial versetzt sind.

Weiter wird in diesem Zusammenhang, also betreffend die zweite Variante vorgeschlagen, dass in einem ersten axialen Endbereich der Aussparung ein einen der Drehwelle zugeordneten Durchgang aufweisendes Einstellelement in der Aussparung definiert positioniert und axial festgelegt ist, beispielsweise mit einem Außengewinde in ein Innengewinde der Aussparung eingeschraubt ist, welches die elastische Kraftspeichereinrichtung spannt, um die Reibflächen in den gegenseitigen Reibeingriff zu spannen; und dass die Drehwelle in die Aussparung von einem zum ersten Endbereich entgegengesetzten Endbereich der Aussparung her in diese einschiebbar oder eingeschoben ist und die eingeschobene Drehwelle an einem im ersten axialen Endbereich angeordneten Ende mit der Kettenführungsbaugruppe, vorzugsweise unter Erzielung einer mittelbaren axialen Abstützung oder Abstützbarkeit für die Drehwelle in einer der ersten axialen Richtung entgegengesetzten zweiten axialen Richtung, verbindbar ist.

Eine dritte Variante zeichnet sich dadurch aus, dass die Vormontageeinheit umfasst: eine Drehwelle, welche an einem ersten Ende mit einer Kettenführungsbaugruppe verbindbar ist, um diese mittels der Drehwelle um eine Drehachse drehbar in einer gestuft ausgeführten, einen Durchgang zwischen entgegengesetzten axialen Seiten eines beweglichen Elements bildenden Aussparung des mit einem Basiselement beweglich gekoppelten oder koppelbaren beweglichen Elements zu lagern; eine Freilaufkupplungseinrichtung und eine Reibeinrichtung mit einer der Reibeinrichtung zugeordneten oder zugehörigen elastischen Kraftspeichereinrichtung, die die Drehwelle radial umschließend und gewünschtenfalls die Drehwelle als Kupplungselement der Freilaufkupplungseinrichtung einbeziehend an dieser angeordnet sind, zum Bilden einer Gegenkrafterzeugungseinrichtung, wobei die Freilaufkupplungseinrichtung eine Rollenkupplung aufweist und die Reibeinrichtung in gegenseitigem Reibeingriff stehende oder in gegenseitigen Reibeingriff bringbare, bezogen auf die Drehachse im Wesentlichen axial gerichtete Reibflächen aufweist, die mittels der der Reibeinrichtung zugeordneten oder zugehörigen elastischen Kraftspeichereinrichtung gegeneinander vorspannbar sind, wobei die Reibflächen bezogen auf die Drehachse gegenüber zwischen einem radial inneren Kupplungselement und einem radial äußeren Kupplungselement der Rollenkupplung wirksamen Rollelementen der Rollenkupplung axial versetzt sind.

Weiter wird in diesem Zusammenhang, also betreffend die dritte Variante vorgeschlagen, dass in Nachbarschaft zu einem ersten axialen Ende der Drehwelle ein Einstellelement an der Drehwelle definiert positioniert und axial festgelegt ist, beispielsweise mit einem Innengewinde an einem Innenumfang auf ein Außengewinde der Drehwelle aufgeschraubt ist, welches die elastische Kraftspeichereinrichtung spannt, um die Reibflächen in den gegenseitigen Reibeingriff zu spannen; und dass die Drehwelle an dem ersten axialen Ende mit der Kettenführungsbaugruppe verbindbar ist und die Drehwelle mit dem beweglichen Element zusammensetzbar ist, indem die Drehwelle von einer ersten axialen Seite des beweglichen Elements her mit einem zum ersten Ende entgegengesetzten zweiten Ende voran in die Aussparung eingeschoben und an einem dem zweiten Ende benachbarten Endbereich von der zur ersten axialen Seite entgegengesetzten zweiten axialen Seite des beweglichen Elements her an dem beweglichen Element gegen ein Herausziehen aus der Aussparung gesichert wird.

Eine vierte Variante zeichnet sich dadurch aus, dass die Vormontageeinheit umfasst: ein bewegliches Element, welches mit einem Basiselement beweglich gekoppelt oder koppelbar ist und eine gestuft ausgeführte Aussparung aufweist, die als Durchgang zwischen bezogen auf eine Achse entgegengesetzten axialen Seiten des beweglichen Elements ausgeführt ist und in der eine mit einer Kettenführungsbaugruppe verbindbare Drehwelle um eine der Achse entsprechende Drehachse drehbar gelagert und in einer ersten der axialen Richtungen durch das bewegliche Element axial abgestützt oder abstützbar ist, gewünschtenfalls unter Vermittlung wenigstens eines in die Aussparung aufgenommen Abstützelements; eine Freilaufkupplungseinrichtung und eine Reibeinrichtung mit einer der Reibeinrichtung zugeordneten oder zugehörigen elastischen Kraftspeichereinrichtung, die die Drehwelle radial umschließend und gewünschtenfalls die Drehwelle als Kupplungselement der Freilaufkupplungseinrichtung einbeziehend an dieser angeordnet sind, zum Bilden einer Gegenkrafterzeugungseinrichtung, wobei die Freilaufkupplungseinrichtung eine Rollenkupplung aufweist und die Reibeinrichtung in gegenseitigem Reibeingriff stehende oder in gegenseitigen Reibeingriff bringbare, bezogen auf die Drehachse im Wesentlichen axial gerichtete Reibflächen aufweist, die mittels der der Reibeinrichtung zugeordneten oder zugehörigen elastischen Kraftspeichereinrichtung gegeneinander vorspannbar sind, wobei die Reibflächen bezogen auf die Drehachse gegenüber zwischen einem radial inneren Kupplungselement und einem radial äußeren Kupplungselement der Rollenkupplung wirksamen Rollelementen der Rollenkupplung axial versetzt sind.

Weiter wird in diesem Zusammenhang, also betreffend die vierte Variante vorgeschlagen, dass in Nachbarschaft zu einem ersten axialen Ende der Drehwelle ein Einstellelement an der Drehwelle definiert positioniert und axial festgelegt ist, beispielsweise mit einem Innengewinde an einem Innenumfang auf ein Außengewinde der Drehwelle aufgeschraubt ist, welches die elastische Kraftspeichereinrichtung spannt, um die Reibflächen in den gegenseitigen Reibeingriff zu spannen; wobei die Drehwelle an dem ersten axialen Ende mit der Kettenführungsbaugruppe, vorzugsweise unter Erzielung einer mittelbaren axialen Abstützung oder Abstützbarkeit für die Drehwelle in einer der ersten axialen Richtung entgegengesetzten zweiten axialen Richtung, verbindbar ist.

Bevorzugte Ausführungsformen eines hinteren Fahrradumwerfers zeichnen sich dadurch aus, dass das äußere Kupplungselement über die Reibflächen reibschlüssig mit dem beweglichen Element gekoppelt ist, zur Erzeugung von einer Verdrehung des äußeren Elements entgegenwirkenden Gegenkräften, und dass die/eine Drehwelle das innere Kupplungselement bildet oder zu diesem drehfest ist. Ein solcher Fahrradumwerfer kann besonders zweckmäßig aus einer Vormontageeinheit nach der ersten Variante oder der zweiten Variante hergestellt sein.

Weitere bevorzugte Ausführungsformen eines erfindungsgemäßen hinteren Fahrradumwerfers zeichnen sich dadurch aus, dass das äußere Kupplungselement drehfest zu dem beweglichen Element ist, vorzugsweise aufgrund einer Formschlußverbindung, und dass die/eine Drehwelle mit dem inneren Kupplungselement über die Reibflächen reibschlüssig gekoppelt ist zur Übertragung von Drehmitnahmekräften. Ein solcher hinterer Fahrradumwerfer kann besonders zweckmäßig aus einer Vormontageeinheit nach der dritten oder vierten Variante hergestellt sein.

Zweckmäßige Ausführungsformen eines hinteren Fahrradumwerfers zeichnen sich dadurch aus, dass die Drehwelle mittels eines vorzugsweise lösbaren Haltemittels, beispielsweise mittels eines lösbaren Halteelements wie etwa ein Sprengring, an dem beweglichen Element gegen ein Herausziehen aus der Aussparung gesichert ist, welcher die Drehwelle in einer ersten der axialen Richtungen an dem beweglichen Element axial abstützt, gewünschtenfalls unter Vermittlung wenigstens eines in die Aussparung aufgenommenen Abstützelements. Auch solch ein Fahrradumwerfer kann zweckmäßig aus einer Vormontageeinheit nach der dritten Variante hergestellt sein. Weiterbildend wird vorgeschlagen, dass die Drehwelle vermittels der Kettenführungsbaugruppe oder/und vermittels eines Anschlags der Drehwelle innerhalb der Aussparung an dem beweglichen Element in einer der ersten axialen Richtung entgegengesetzten zweiten axialen Richtung abgestützt oder abstützbar ist.

Die Erfindung stellt ferner auch ein Verfahren zum Herstellen eines hinteren Fahrradumwerfers nach der Erfindung bereit. Eine bevorzugte Ausgestaltung des Verfahrens zeichnet sich dadurch aus, dass zuerst eine Vormontageeinheit nach einer der angesprochenen Varianten hergestellt wird, und das diese dann mit fehlenden Komponenten kombiniert wird, um den erfindungsgemäßen Fahrradumwerfer zu bilden. Bevorzugt wird im Falle des Vorsehens des Einstellelements dieses im Zuge der Herstellung der Vormontageeinheit so eingestellt, dass die Gegenkrafterzeugungseinrichtung des fertigen Fahrradumwerfers im Betrieb die gewünschte Gegenkraft ausübt. Soweit also einen Justage oder Kalibrierung vorgesehen ist, sollte diese bevorzugt anhand der Vormontageeinheit erfolgen. Dies ist besonders vorteilhaft bei den Vormontageeinheiten nach der zweiten, der dritten und der vierten Variante möglich.

Die Erfindung wird nun anhand von in den Figuren dargestellten Ausführungsbeispielen weiter erläutert.
- Figur 1: ist eine perspektivische Ansicht einer ersten Ausführungsform eines hinteren Umwerfers, der eine erfindungsgemäße Dämpferbaugruppe gemäß einem ersten Konstruktionsansatz enthält und der in seiner äußeren Gestalt einem hinteren Umwerfer gemäß DE 10 2013 001 952 A1 im Wesentlichen entspricht.
- Figur 2: zeigt in den Teilfiguren a) und b) zwei Schnittansichten der Dämpferbaugruppe gemäß eine Drehachse einer Kettenführungsbaugruppe enthaltenden, winkelmäßig gegeneinander versetzten Schnittebenen.
- Figur 3: zeigt eine Querschnittsansicht durch die Dämpferanordnung gemäß Schnittlinie III-III in Figur 2a).
- Figur 4: zeigt eine perspektivische Explosionsansicht von Komponenten der Dämpferbaugruppe.
- Figur 5: zeigt eine perspektivische Explosionsansicht der Komponenten der Dämpferbaugruppe samt weiterer Komponenten des Umwerfers.
- Figur 6: zeigt Schnittansichten einer zweiten Ausführungsform eines erfindungsgemäßen Derailleurs mit einer erfindungsgemäßen Dämpferbaugruppe gemäß einem zweiten Konstruktionsansatz in Ansichten entsprechend Figur 2.
- Figur 7: zeigt eine Querschnittsansicht durch die Dämpferbaugruppe gemäß Schnittlinie VII-VII in Figur 6a).
- Figur 8: ist eine perspektivische Explosionsansicht von Komponenten der Dämpferbaugruppe samt dem beweglichen Element des Ausführungsbeispiels der Figuren 6 und 7.
- Figur 9: ist eine perspektivische Explosionsansicht der Komponenten gemäß Figur 8 zusammen mit weiteren Komponenten des Umwerfers.
- Figur 10: ist eine perspektivische Ansicht einer dritten Ausführungsform eines hinteren Umwerfers, der eine erfindungsgemäße Dämpferbaugruppe gemäß einem dritten Konstruktionsansatz enthält.
- Figur 11: zeigt Schnittansichten durch die Dämpferbaugruppe des Ausführungsbeispiels der Figur 10 in Ansichten entsprechend Figur 2.
- Figur 12: ist eine Querschnittsansicht durch die Dämpferbaugruppe entsprechend Schnittlinie XII-XII in Figur 11a).
- Figur 13: ist eine perspektivische Explosionsansicht von Komponenten der Dämpferbaugruppe des Ausführungsbeispiels der Figuren 10 bis 12.
- Figur 14: ist eine perspektivische Explosionsansicht der Komponenten der Dämpferbaugruppe gemäß Figur 13 zusammen mit weiteren Komponenten des Umwerfers.
- Figur 15: zeigt in den Teilfiguren 15a) und 15b) Schnittansichten einer vierten Ausführungsform eines erfindungsgemäßen Derailleurs mit einer erfindungsgemäßen Dämpferbaugruppe gemäß einem vierten Konstruktionsansatz in Ansichten entsprechend Figur 2.
- Figur 16: zeigt in der Teilfigur 16a) eine Querschnittsansicht durch die Dämpferbaugruppe gemäß Schnittlinie A-A in Figur 15b) und in Teilfigur 16b) eine Querschnittsansicht durch die Dämpferbaugruppe gemäß Schnittlinie B-B in Figur 15a).
- Figur 17: ist eine perspektivische Explosionsansicht von Komponenten der Dämpferbaugruppe des Ausführungsbeispiels der Figuren 15 und 16 zusammen mit weiteren Komponenten des Umwerfers.

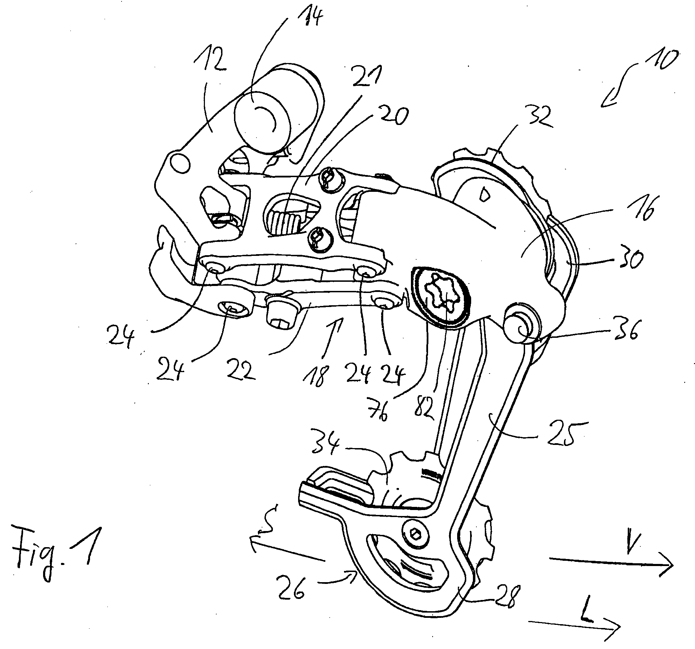

Ein erstes Ausführungsbeispiel für einen erfindungsgemäßen Fahrradumwerfer, der eine Dämpferbaugruppe gemäß einem ersten konstruktiven Ansatz enthält, ist in den Figuren 1 bis 5 in verschiedenen Ansichten gezeigt.

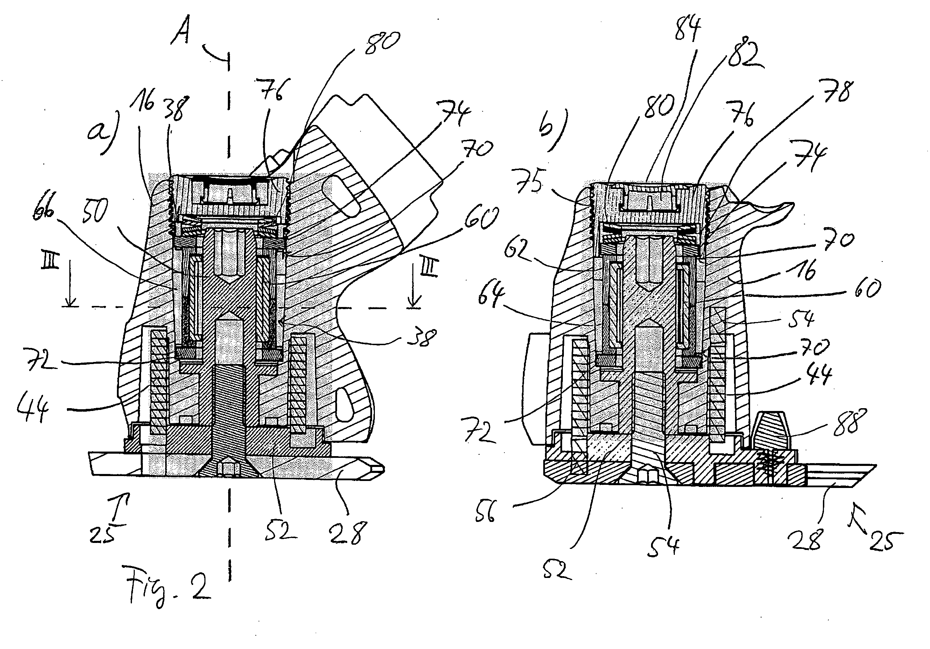

Der Fahrradumwerfer 10 weist ein sogenanntes Basiselement 12 und eine vorliegend als Parallelogramm ausgeführte Schwinge 18 auf, die beispielsweise mit zwei Verbindungselementen 20 und 22 ausgeführt ist, die drehbar mit Befestigungsabschnitten des Basiselements 12 verbunden sind. Ein sogenanntes bewegliches Element 16 ist an einem dem Basiselement 12 entgegengesetzten Endbereich der Schwinge 18, hier an zu dem Basiselement 12 entgegengesetzten Enden der Verbindungselemente 20 und 22, mit der Schwinge verbunden, so dass das bewegliche Element mittels der Schwinge 18 auf an sich bekannte Art und Weise in seitlicher Richtung relativ zu einem Fahrradrahmen bewegbar ist, um mittels einer Kettenführungsbaugruppe 25 die Kette einer Kettenschaltung zwischen Ritzeln eines Ritzelsatzes des hinteren Laufrads des Fahrrads umzuwerfen. Die Kettenführungsbaugruppe 25 ist drehbar am beweglichen Element 16 angebracht und mittels einer Vorspannfederanordnung, vorliegend in Form einer Torsionsfeder 44 (vgl. Figur 2) in einer Kettenspannrichtung vorgespannt. Der Umwerfer 10 enthält im beweglichen Element 16 eine Dämpferbaugruppe 38, die eine Rotationsbewegung der Kettenführungsbaugruppe 25 relativ zum beweglichen Element 16 in einer zur Kettenspannrichtung entgegengesetzten Drehrichtung dämpft. Mit dem Begriff Dämpferbaugruppe ist hier eine Einrichtung angesprochen, die auch als "Gegenkrafterzeugungseinrichtung" bezeichenbar ist und eine Freilaufkupplungseinrichtung sowie eine Reibeinrichtung und eine der Reibeinrichtung zugeordnete oder zugehörige elastische Kraftspeichereinrichtung umfasst und mittels der auf die Kettenführungsbaugruppe eine einer Drehung in einer der Kettenspannrichtung (erste Drehrichtung) entgegengesetzten Drehrichtung (zweite Drehrichtung) relativ zu dem beweglichen Element entgegenwirkende Gegenkraft ausübbar ist. Das Basiselement 12, das auch als "B-Knuckle" bekannt ist, kann an einem Fahrradrahmen mittels eines Befestigungselements 14, zum Beispiel einer Schraube, angebracht werden. Ein Paar von Drehzapfen 24, die als Bolzen ausgeführt sein können, verbinden das Basiselement 12 mit der Schwinge 18.

Die Schwinge 18 enthält ein schon angesprochenes äußeres Verbindungselement 20 und ein schon angesprochenes inneres Verbindungselement 22 sowie ein Vorspannelement 21, zum Beispiel in Form einer Feder, um den Umwerfer 10 in Richtung einer Anfangs-Wegposition festzuspannen, wie im Fachgebiet allgemein bekannt ist.

Das bewegliche Element 16, das auch als "P-Knuckle" bekannt ist, ist über ein Paar von weiteren Drehzapfen 24 auf ähnliche Weise wie das Basiselement 12 an der Schwinge schwenkbar angebracht. Es sind im Prinzip beliebige Mittel zur Kopplung des beweglichen Elements 16 mit dem Basiselement 12 im Rahmen der Erfindung vorstellbar.

Die Kettenführungsbaugruppe 25 enthält eine Kettenführung 26 mit einem Paar beabstandeten Käfigplatten, einer äußeren Käfigplatte 28 und einer inneren Käfigplatte 30. Zwischen den Käfigplatten 28 und 30 ist ein Paar von Führungsrädern zum Führen einer nicht dargestellten Kette drehbar angeordnet, nämlich ein oberes Führungsrad 32 und ein unteres Führungsrad 34.

Eine Vorwärtsrichtung V entspricht der Vorwärtsrichtung eines eine Kettenschaltung mit dem Umwerfer aufweisenden Fahrrads. Eine Schwenkrichtung der Kettenführungsbaugruppe 25, in der die geführte Kette gespannt wird, ist mit S bezeichnet. Die zu dieser Kettenspannrichtung S entgegengesetzte Richtung in der Vorwärtsrichtung V ist mit L bezeichnet. Ein Verschwenken der Kettenführungsbaugruppe 25 in dieser Schwenkrichtung L kann eine unerwünschte Reduzierung der Kettenspannung zur Folge haben, gegebenenfalls mit der Gefahr, dass die so gelockerte Kette von dem Ritzelpacket abspringen könnte.

Wie in Figur 1 dargestellt, kann das bewegliche Element 16 mit einem Käfig-Sperrmechanismus 36 ausgeführt sein, der dazu betätigbar ist, dass die Kettenführungsbaugruppe 25 in einer bestimmten Schwenkposition relativ zum beweglichen Element 16 fixiert wird, um so beispielsweise Wartungsarbeiten leicht vornehmen zu können.

Figur 2 zeigt, wie die äußere Käfigplatte 28 der Kettenführung 26 mit einer im beweglichen Element drehbar gelagerten Drehwelle 50 drehfest verbunden ist. Zwischen der äußeren Käfigplatte 28 und dem beweglichen Element 16 befindet sich eine Zwischenscheibe 52, die durch in Öffnungen der Käfigplatte eingreifende Vorsprünge mit dieser drehfest verbunden ist. Die Käfigplatte samt der Zwischenscheibe ist mit der Drehwelle 50 durch eine in ein Innengewinde der Drehwelle eingeschraubte Schraube 54 verbunden. Das vorliegend als Torsionsfeder ausgeführte Vorspannelement 44 greift einerseits mit einem Koppelabschnitt bei 54 formschlüssig in das bewegliche Element ein und andererseits mit einem Koppelabschnitt bei 56 formschlüssig in die Zwischenscheibe 52 und die Käfigplatte 28 ein, so dass das Vorspannelement die Kettenführungsbaugruppe 44 in der Kettenspannrichtung S gemäß Figur 1 vorspannt, um die nicht dargestellte, auf übliche Weise mit den Führungsrädern 32 und 34 in Eingriff stehende Kette unter Spannung zu erhalten bzw. die nötige Spannung wieder herzustellen.

Die Dämpferbaugruppe 38 enthält eine Einweg- oder Freilaufkupplung in Form einer sogenannten Rollenkupplung 60 üblicher Bauart, mit einem inneren Kupplungselement und einem äußeren Kupplungselement und zwischen diesen wirksamen Rollelementen. Das innere Element könnte von einer drehfest an der Drehwelle angebrachten Hülse oder dergleichen gebildet sein. Demgegenüber ist es aber bevorzugt, dass, wie beim beschriebenen Ausführungsbeispiel, die Drehwelle 50 das innere Kupplungselement der Rollenkupplung bildet.

Die Rollenkupplung 60 ist derart konfiguriert, dass die der Kettenspannrichtung S entsprechende Drehrichtung der Drehwelle 50 die Freilaufdrehrichtung der Rollenkupplung ist, in der sich das Kupplungselement ungehindert relativ zum äußeren Kupplungselement drehen kann, und dass die der der Kettenspannrichtung S entgegengesetzte Schwenkrichtung L der Sperrrichtung der Rollenkupplung entspricht, in der eine Verdrehung des inneren Kupplungselements relativ zum äußeren Kupplungselement der Rollenkupplung gesperrt ist, so dass sich die Drehwelle 50 und damit die Kettenführungsbaugruppe 25 in dieser Richtung nur unter Mitnahme des äußeren Kupplungselements verdrehen kann.

Die Rollenkupplung kann vorteilhaft von einem sogenannten Hülsenfreilauf gebildet sein, einem hülsenartigen Element, an dessen Innenumfang die Rollelemente gehalten sind und das mit der als inneres Kupplungselement dienenden Drehwelle 50 kombiniert ist.

Das äußere Kupplungselement der Rollenkupplung 60 ist mit einer auch als Dämpfer ansprechbaren Reibeinrichtung 70 gekoppelt. Im Falle des Ausführungsbeispiels ist es eine indirekte Kopplung vermittels zweier hülsenartiger Element 62 und 64, in die die Rollenkupplung 60 drehfest aufgenommen ist, beispielsweise im Presssitz, und die an beiden axialen Enden bezogen auf die Drehachse A der Drehwelle 50 der so gebildeten Hülsenanordnung mit einem eine axial gerichtete Reibfläche bereitstellenden Flanschabschnitt ausgeführt sind. Die in der Darstellung der Figur 2 der Kettenführungsbaugruppe axial nähere Hülse 64 greift mit ihrer ringförmigen Reibfläche ihres Endflansches an einer im beweglichen Element 16 drehfest festgelegten und axial an einer Stufe einer die angesprochene Anordnung aufnehmenden Aussparung 66 axial abgestützten Reibscheibe 72 an. Die Drehfestlegung der Reibscheibe 72 kann beispielsweise dadurch bewirkt sein, dass die Reibscheibe an ihrem Außenumfang mit einer Rändelung ausgeführt ist und in die Aussparung 66 in den Anschlag mit der angesprochenen Stufe eingepresst ist.

Auch die von der Kettenführungsbaugruppe 25 axial entferntere Hülse 62 steht an ihrer Ringreibfläche ihres Endflansches mit einer Reibscheibe 74 in Eingriff, die ebenfalls drehfest in der Aussparung 66 des beweglichen Elements 16 aufgenommen ist, allerdings ohne direkte axiale Abstützung an dem beweglichen Element. Die Aussparung 66 weist an ihrem von der Kettenführungsbaugruppe 25 entfernteren Endbereich ein Innengewinde 75 auf, in das ein Schraubelement 76 eingeschraubt ist, welches die als gestufte Durchgangsbohrung ausgeführte Aussparung 66 an dieser von der Kettenführungsbaugruppe 25 axial entfernten Seite des beweglichen Elements 16 verschließt und an seiner Innenseite eine Aussparung 78 aufweist, in die das axial innere Ende der Drehwelle 50 vorsteht und in die die schon angesprochene Reibscheibe 74 sowie eine der Reibeinrichtung zugeordnete elastische Kraftspeichereinrichtung, beim Ausführungsbeispiel in Form mehrerer Tellerfedern, aufgenommen ist, die mit 80 bezeichnet ist. Die Reibscheibe 74 ist mit wenigstens einem radial vorstehenden Vorsprung 74a ausgeführt, der in eine zu der Aussparung 78 offene radiale Aussparung 76a des Schraubelements 76 eingreift, so dass die Reibscheibe 74 gegenüber dem Schraubelement 76 nicht verdrehbar ist.

Die Reibscheibe 74 ist durch die Kraftspeichereinrichtung 80 gegen das Hülsenelement 62 axial vorgespannt, woraus eine entsprechende axiale Vorspannung des Hülsenelements 64 gegen die Reibscheibe 72 resultiert, da die entsprechende Vorspannkraft über die Hülsen 62 und 64 axial übertragen wird, die Rollenkupplung 60 überbrückend. Die von der Kraftspeichereinrichtung 80 aufgebrachte Vorspannkraft bestimmt also den reibschlüssigen Eingriff zwischen einerseits den axial gerichteten Reibflächen des Flanschendabschnitts des Hülsenelements 62 und der Reibscheibe 74 und andererseits der axial gerichteten Reibflächen des Flanschendabschnitts des Hülsenelements 64 und der Reibscheibe 72.

Bei der Fertigung des Umwerfers wird das insoweit als Einstellelement dienende Schraubelement 76 soweit in das Innengewinde 74 der Aussparung 66 des beweglichen Elements 16 eingeschraubt, dass eine Vorspannung der angesprochenen Reibflächen gegeneinander resultiert, die eine benötigte reibschlüssige Gegenkraft gegen ein Verdrehung der Kettenführungsbaugruppe 25 in der Schwenkrichtung L bewirkt. In dieser Schwenkrichtung L sperrt die Rollenkupplung 60, wie schon angesprochen, so dass die Drehwelle 50 das äußere Kupplungselement der Rollenkupplung und damit die Hülsenelemente 62 und 64 bei der Drehung mitnimmt, so dass die axial gerichteten Reibflächen der Hülsen 62 und 64 sich relativ zu der zugeordneten Reibfläche der jeweiligen Reibscheibe 72 und 74 drehen, so dass die auftretende Reibung das Verschwenken der Kettenführungsbaugruppe in dieser Richtung L erschwert. Es tritt also eine der Verschwenkung in dieser Schwenkrichtung entgegenwirkende, durch Reibung aufgebrachte Gegenkraft auf. Die Größe dieser Gegenkraft hängt davon ab, wie tief das Schraubelement 76 in das Innengewinde 75 der Aussparung 66 eingeschraubt ist.

Um bei der Fertigung des Umwerfers das Schraubelement 76 entsprechend in das Innengewinde 75 einschrauben zu können und damit die im Betrieb auftretende Gegenkraft einzustellen, weist das Schraubelement 76 eine Werkzeugeingriffsöffnung mit Drehmitnahmeformationen an einem Innenumfang des Schraubelements auf.

Bei einem fertig hergestellten Umwerfer ist das Schraubelement 76 vorzugsweise durch eine Verklebung zwischen dem Innengewinde 75 des beweglichen Elements 16 und dem komplementären Außengewinde des Schraubelements 76 gegen Verdrehung gesichert und ist die Werkzeugeingriffsöffnung 82 durch eine in diese eingeschnappte und vorzugsweise auch festgeklebte Abdeckkappe 84 gesichert, so dass das Schraubelement 76 für eine Betätigung nicht zugänglich und gegen Verdrehung gesichert ist. So sollen Verstellungen des Reibeingriffs und damit der resultierenden Gegenkraft gegenüber der fabrikseitigen Einstellung bzw. Kalibrierung und Justage verhindert werden. Figur 1 zeigt insoweit den Umwerfer in einem Zustand, der nicht der erfindungsgemäß bevorzugte Zustand ist, da die Verschlusskappe 84 nicht in der Aussparung 82 montiert ist. Es kann sich insoweit um einen Zustand kurz vor der endgültigen Fertigstellung des Umwerfers handeln. Die angesprochene Einstellung und Kalibrierung des Reibschlusses und dann die Sicherung des Schraubelements 76 gegen Betätigung durch die Kappe 84 können aber auch in einem ansonsten noch nicht fertigen Zustand des Umwerfers erfolgen, etwa bevor das bewegliche Element 16 mit der Schwinge 18 verbunden wird.

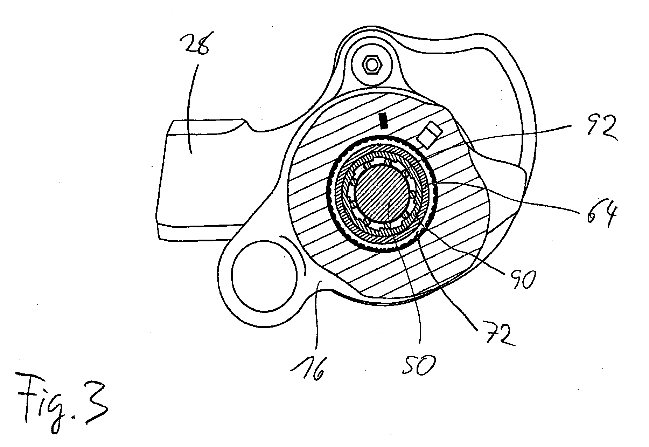

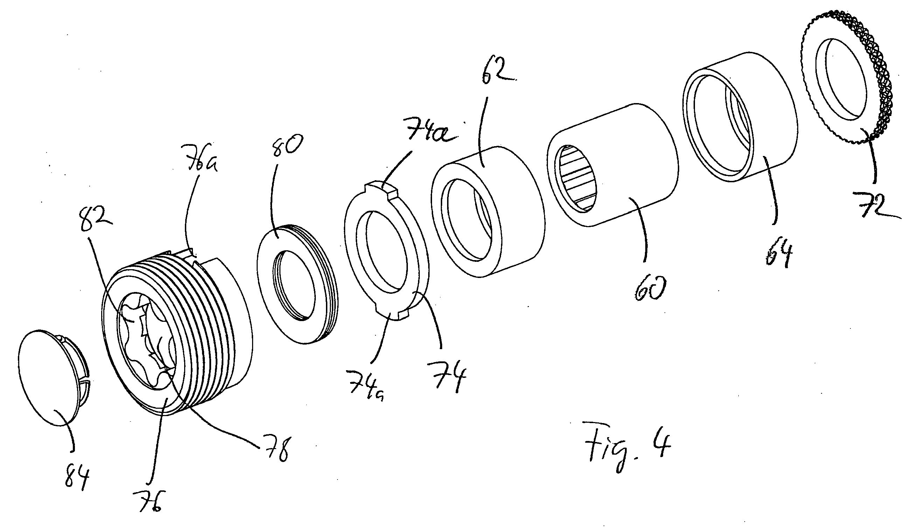

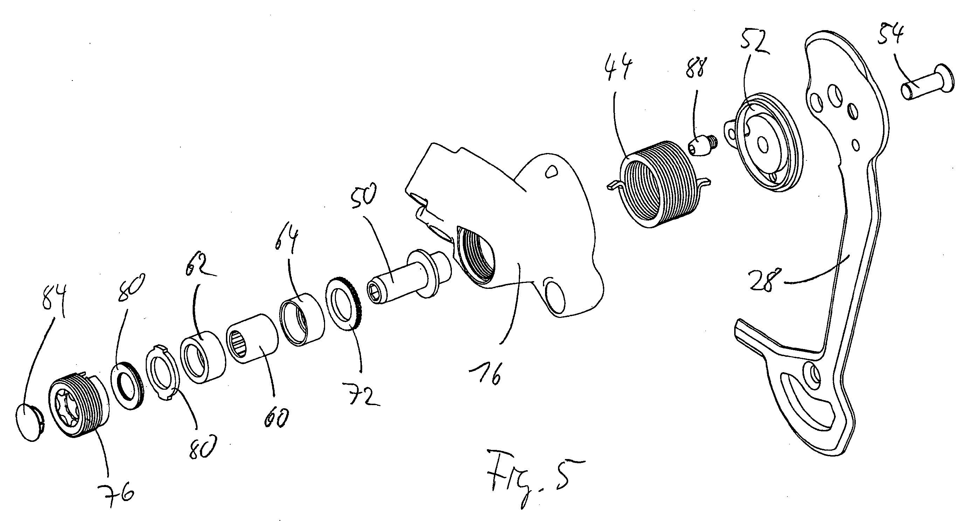

Weitere Einzelheiten des Umwerfers nach dem ersten Ausführungsbeispiel erschließen sich dem Fachmann ohne weiteres aus den zugehörigen Figuren. Eine Anschlagschraube oder ein Anschlagstift zur Begrenzung des Schwenkwinkels der Kettenführungsbaugruppe ist mit 88 bezeichnet. Es ergibt sich aus den Explosionsansichten der Figuren 4 und 5 auch, wie und in welcher Reihenfolge die angesprochenen Komponenten der Dämpferbaugruppe 38 in die Aussparung 66 des beweglichen Elements 16 aufzunehmen sind. Aus Figur 3 ist auch der Aufbau der beispielsweise vorzusehenden Rollenkupplung 60 genauer zu erkennen, mit der Drehwelle 50 als inneres Kupplungselement, einem auf an sich bekannte Art und Weise am Innenumfang ausgestalteten äußeren Kupplungselement 90 und einer Mehrzahl von Rollelementen 92 zwischen den beiden Kupplungselementen. Die schon angesprochene Rändelung der Reibscheibe 72 an deren Außenumfang ist angedeutet.

Anzumerken ist noch, dass die Drehwelle 50 an ihrem zur Schraube 54 entgegengesetzten Ende eine Werkzeugeingriffsöffnung aufweist, die dazu dient, beim Einschrauben der Schraube 54 zur Montage der Zwischenscheibe 72 und der Käfigplatte 78 an der Schraubwelle bei dieser Verschraubung auftretende, auf die Drehwelle 50 wirkende Drehkräfte abzustützen. Wird diese Werkzeugeingriffsöffnung beim Zusammenbau der angesprochenen Komponenten genutzt, so müssen die Kraftspeichereinrichtung 80 und das Schraubelement 76 erst danach in der Aussparung 66 positioniert bzw. in das Innengewinde 75 eingeschraubt werden.

Bevorzugt ist Rollenkupplung 60 in Presseingriff mit den Hülsenelementen 62 und 64, um diese axial gegen Verdrehung an dem äußeren Kupplungselement zu sichern. Man kann auch andere Arten der Drehkopplung vorsehen. So gibt es Hülsenfreiläufe mit einer Rändelung am Außenumfang, die sich für die Herstellung einer drehfesten Verbindung anbietet. Man kann auch daran denken, auf eine zusätzliche Hülsenanordung wie die Hülsen 62 und 64 zu verzichten und das äußere Kupplungselement mit Reibflächen hinreichenden Flächeninhalts an den axialen Enden auszuführen, beispielsweise mit entsprechenden Flanschabschnitten.

Betreffend das für die Einstellung des Reibeingriffs dienende Schraubelement 76 ist anzumerken, dass auch andersartige Einstellelemente in Betracht kommen, ohne Verschraubung mit dem beweglichen Element. So könnte ein entsprechendes Einstellelement auch im Presssitz in dem Endabschnitt der Aussparung 66 aufgenommen sein. Auch ein Bajonett-Verschlusselement, welches mit zugeordneten Bajonett-Eingriffsformationen am Innenumfang der Aussparung 66 eingreift, kommt in Betracht.

Betreffend die Drehabstützung der Reibscheiben 72 und 74 kommen auch andere Ausgestaltungen in Betracht. So könnte auch die Reibscheibe 72 mit wenigstens einem radialen Vorsprung ausgeführt sein, der in eine komplementäre Formation am Innenumfang der Aussparung 66 eingreift. Eine Drehabstützung kann beispielsweise allgemein durch wenigstens eine vorstehende Nase, eine Verkeilung oder mittels eines Stiftmerkmals erfolgen.

Zum Ausführungsbeispiel ist noch insgesamt anzumerken, dass sowohl axiale als auch radiale Kompaktheit für das bewegliche Element 16 ermöglicht ist. So überlappen sich die axial gerichteten Reibflächen mit der Rollenkupplung 60 zumindest mit der äußeren Kupplungselement und gewünschten falls auch mit den Rollelementen in radialer Richtung. Durch axial gerichteter Reibflächen auf beiden axialen Seiten der Rollenkupplung und nur eine elastische Kraftspeichereinrichtung 80 in Form einer Federanordnung, vorliegend Tellerfedern (es kommen auch andere Arten von Federn in Betracht, beispielsweise Wellfedern oder Torsionsdruckfedern) wird auch der zur Verfügung stehende axiale Bauraum gut ausgenutzt.

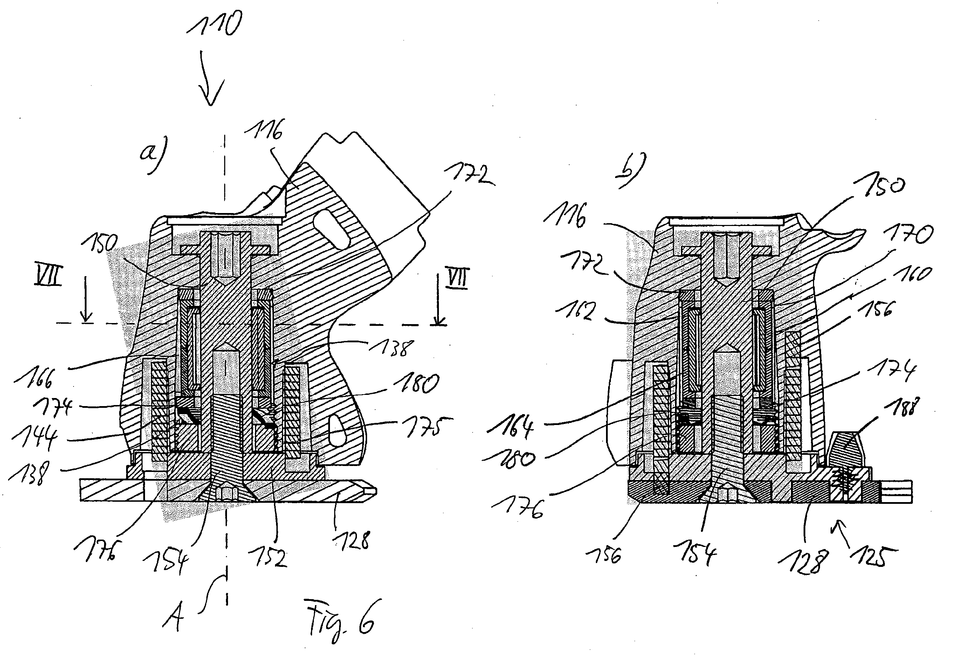

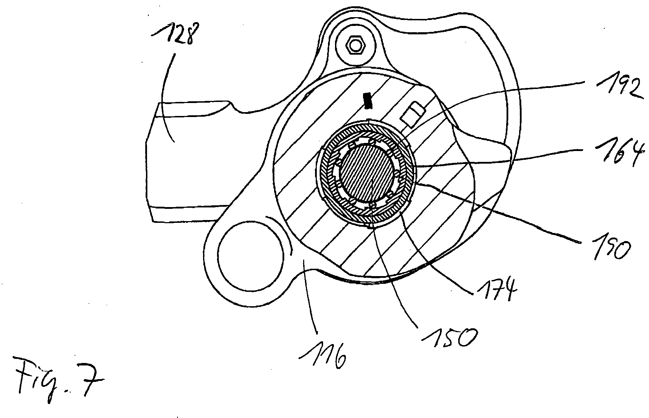

Die Figuren 6 bis 9 zeigen ein einen zweiten Konstruktionsansatz verfolgendes zweites Ausführungsbeispiel. Es werden hier nur die Änderungen gegenüber dem ersten Ausführungsbeispiel erläutert. Für entsprechende oder analoge Komponenten werden die gleichen Bezugszeichen wie für das erste Ausführungsbeispiel verwendet, jeweils vermehrt um 100.

Das zweite Ausführungsbeispiel ist von der Struktur und der Funktion her sehr ähnlichen wie das erste Ausführungsbeispiel. Der wesentliche Unterschied liegt darin, dass das als Einstellelement für die Vorspannung der der Reibeinrichtung zugeordneten elastischen Kraftspeichereinrichtung 180 (im Falle des Ausführungsbeispiels in Form einer Wellfeder), zusammen mit dieser Kraftspeicheranordnung in einem der Kettenführungsbaugruppe 125 näheren Endbereich der als gestufte Durchgangsbohrung ausgeführten Aussparung 166 des beweglichen Elements 116 angeordnet sind, wofür das Innengewinde 175 der Aussparung 166 im an die Zwischenscheibe 152 angrenzenden Endbereich der Aussparung vorgesehen ist. Ohne Beschränkung der Allgemeinheit ist das Einzelelement also wieder als Schraubelement 176 ausgeführt, mit einem als Werkzeugeingriffsöffnung ausgeführten Durchgang für die Drehwelle 250. Mittels der Schraube 154 ist die Käfigplatte 128 mit der Zwischenscheibe 152 mit der von der entgegengesetzten Seite des beweglichen Elements 116 eingeführten Drehwelle 150 verbunden. Die Drehwelle weist eine Werkzeugeingriffsöffnung am anderen Wellenende auf, damit die Schraube 154 einfach festgezogen werden kann. Die Wellfeder 180 wirkt auf die Reibplatte 174, die mittels beispielsweise dreier radialer Vorsprünge 174a drehfest in der Aussparung festgelegt, aber axial beweglich angeordnet ist, um die Vorspannkraft über die Hülsenanordnung 162, 164 zu der axial in der Aussparung 166 an einer Schulter abgestützten Reibplatte 172 zu übertragen, die beispielsweise durch eine Rändelung am Außenumfang in der Aussparung 166 gegen Verdrehung gesichert ist. Als axial gerichtete Reibflächen dienen wieder die Reibflächen an den flanschartigen Endabschnitten der Hülse 162 und der Hülse 164 und die damit eingreifenden Reibflächen der Reibscheiben 172 und 174.

Das Schraubelement 176 oder ein demgegenüber anderes Einstellelement, etwa wie im Zusammenhang mit dem ersten Ausführungsbeispiel als Alternativen erwähnt, ist verborgen und unzugänglich im Inneren des fertig hergestellten Umwerfers, genauer im Inneren der Aussparung 166 angeordnet und durch die Zwischenscheibe 152 und die Käfigplatten verdeckt, so dass es keiner besonderer Sicherheitsmaßnahmen gegen eine unautorisierte Verstellung gegenüber der fabrikseitigen Einstellung bedarf, außer gegebenenfalls der Verwendung einer Verklebung zwischen dem Außengewinde des Schraubelements 176 und dem Innengewinde der Aussparung 166, um die Einstellung gegen Verdrehung aufgrund von Vibrationen und Erschütterungen zu sichern. Im Hinblick auf ein ästhetisches Erscheinungsbild mag man aber den entgegengesetzten Endbereich der Aussparung 166, in dem die Drehwelle 150 durch einen vorstehenden Ringflansch am beweglichen Element 116 axial abgestützt ist, mit einer Abdeckkappe versehen.

Es werden die gleichen Vorteile hinsichtlich axialer und radialer Kompaktheit des beweglichen Elements wie beim ersten Ausführungsbeispiel erreicht. Alle in Bezug auf das erste Ausführungsbeispiel erwähnten Ausführungsvarianten sind analog in Frage kommende Ausführungsvarianten des zweiten Ausführungsbeispiels.

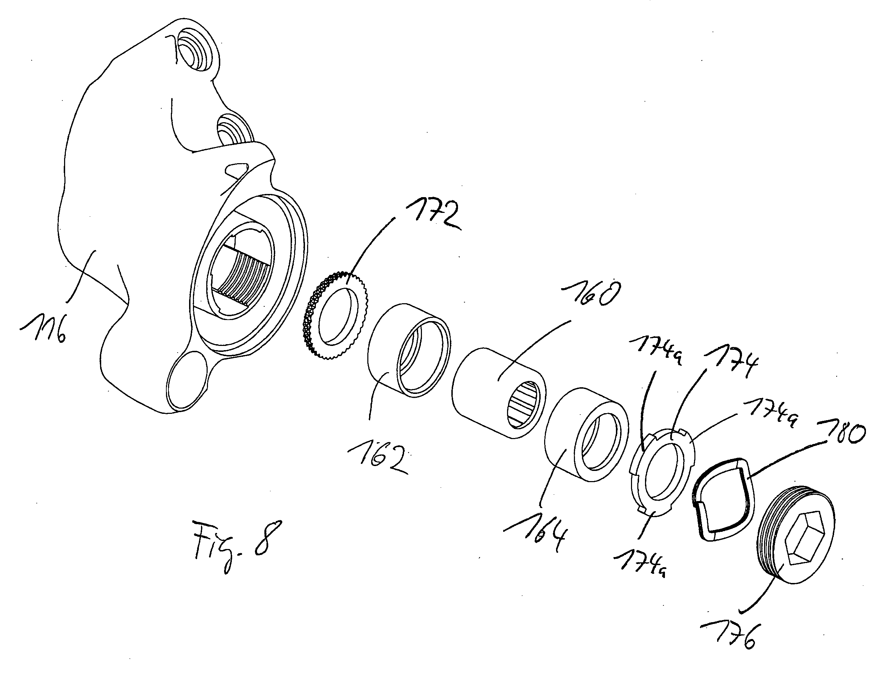

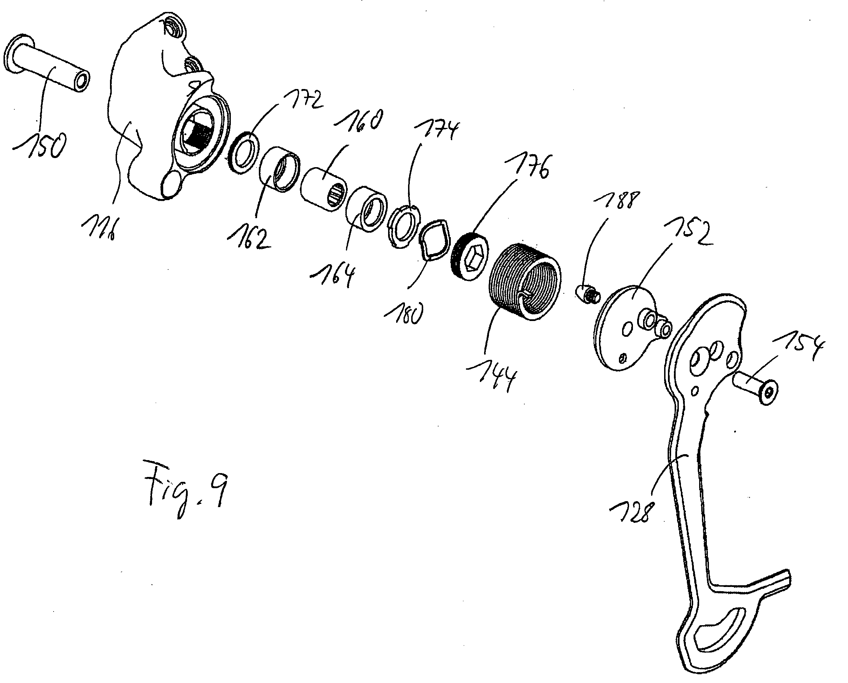

Möglichkeiten hinsichtlich der Art und Weise des Zusammenbaus der angesprochenen Komponenten des zweiten Ausführungsbeispiels ergeben sich aus der in Figur 6 ersichtlichen Struktur und speziell aus den Explosionsansichten der Figuren 8 und 9. Es kommt in Betracht, die Drehwelle 150 erst später nach Einschraubung des Schraubelements 176 von der der Kettenführung entgegengesetzten Seite des beweglichen Elements in die Aussparung 166 einzuführen und dann mittels der Schraube 154 mit der Käfigplatte 128 und der Zwischenscheibe 152 zu verschrauben.

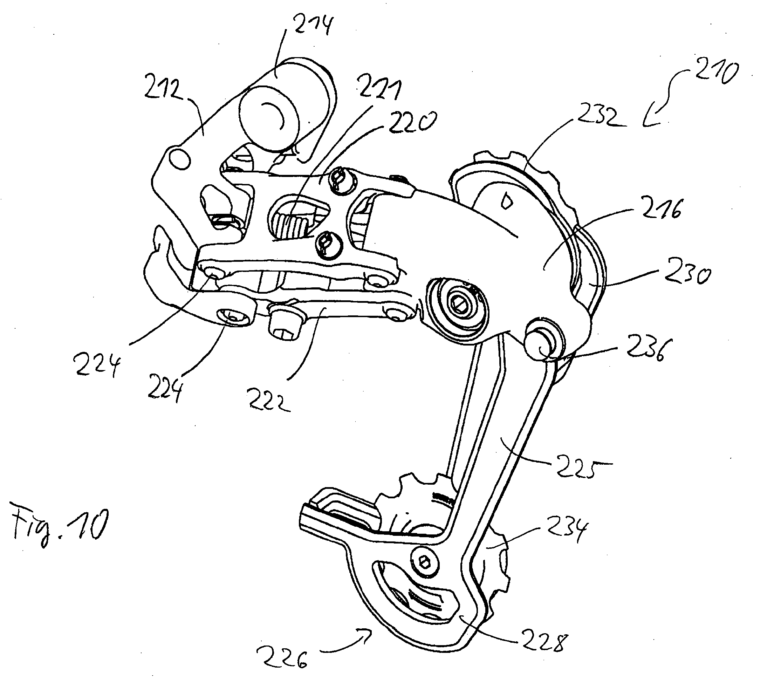

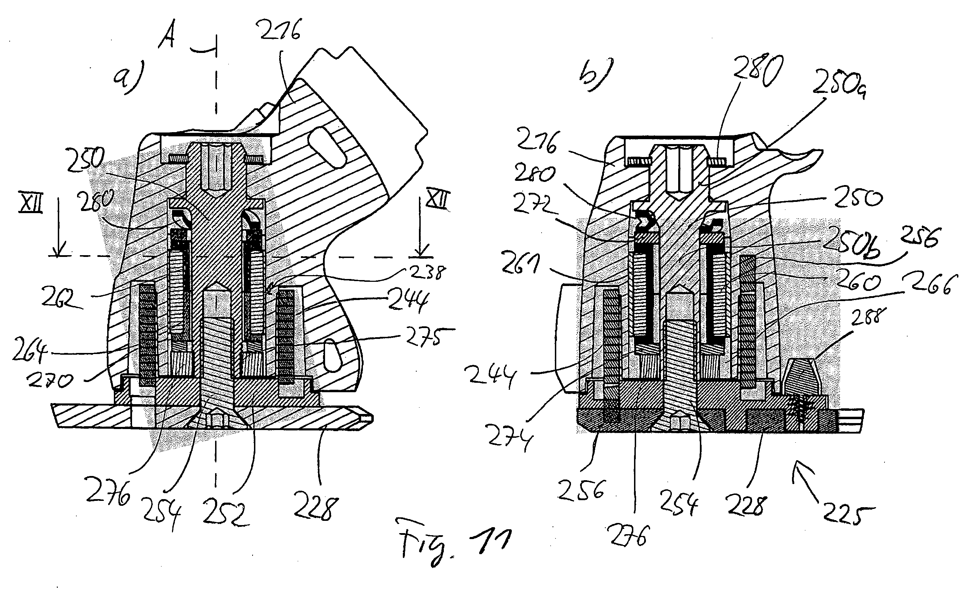

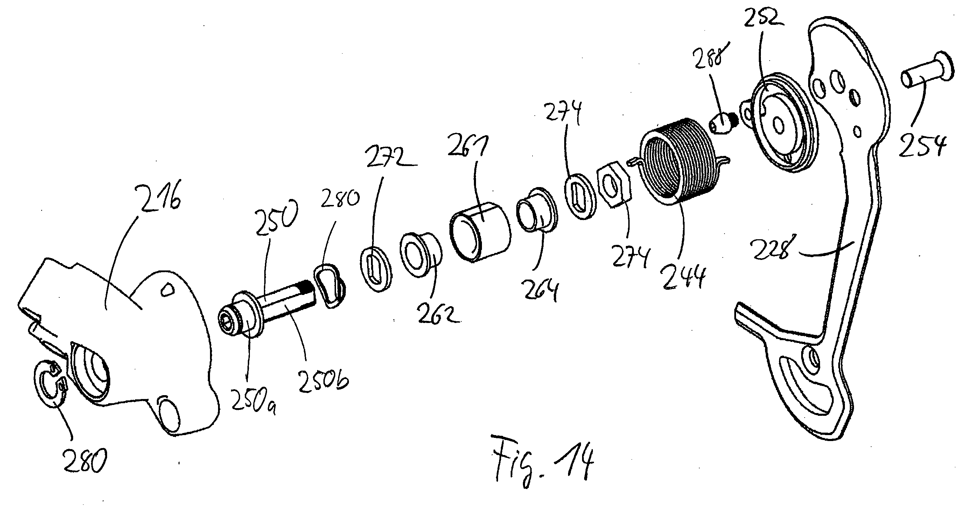

Ein einen dritten Konstruktionsansatz verfolgendes drittes Ausführungsbeispiel ist in den Figuren 10 bis 14 gezeigt. Es werden erneut nur die Unterschiede gegenüber den vorangehend beschriebenen Ausführungsbeispielen erläutert und ansonsten ausdrücklich auf die vorangehende Beschreibung Bezug genommen. Für identische oder analoge Bauteile werden die gleichen Bezugszeichen wie beim ersten Ausführungsbeispiel verwendet, jeweils vermehrt um 200.

Der dritte Konstruktionsansatz unterscheidet sich deutlich von dem ersten und dem zweiten Konstruktionsansatz. Die Drehwelle 250 weist einen der Drehlagerung dienenden Abschnitt 250a mit kreisförmigen (kreiszylindrischem) Außenumfang und einem nicht rotationssymmetrischen Abschnitt 250b auf, mit zwei Kreissegement-Umfangsabschnitte bildenden Schmalseiten 250c und zwei dazwischen liegenden flachen Breitseiten 250d. Die Schmalseiten 250c sind an einem der Zwischenscheibe 252 benachbarten Endabschnitt mit Außengewindeabschnitten 275 ausgeführt, auf die das mit einem komplementären Innengewinde ausgeführte Schraubelement 276 aufgeschraubt ist, durch welches eine auf der entgegengesetzten Axialseite der die Drehwelle umschließenden Rollenkupplung 260 angeordnete elastische Kraftspeicheranordnung 280 beispielsweise in Form einer Wellfeder axial vorgespannt ist, um axial gerichtete Reibflächen einer Reibscheiben 272 und 274 umfassenden Reibeinrichtung in gegenseitigen Reibeingriff vorzuspannen.

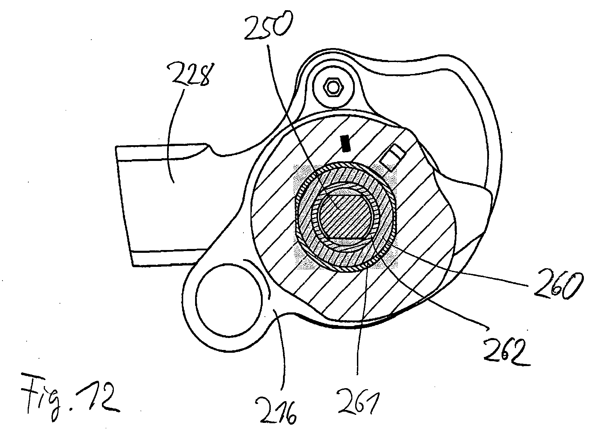

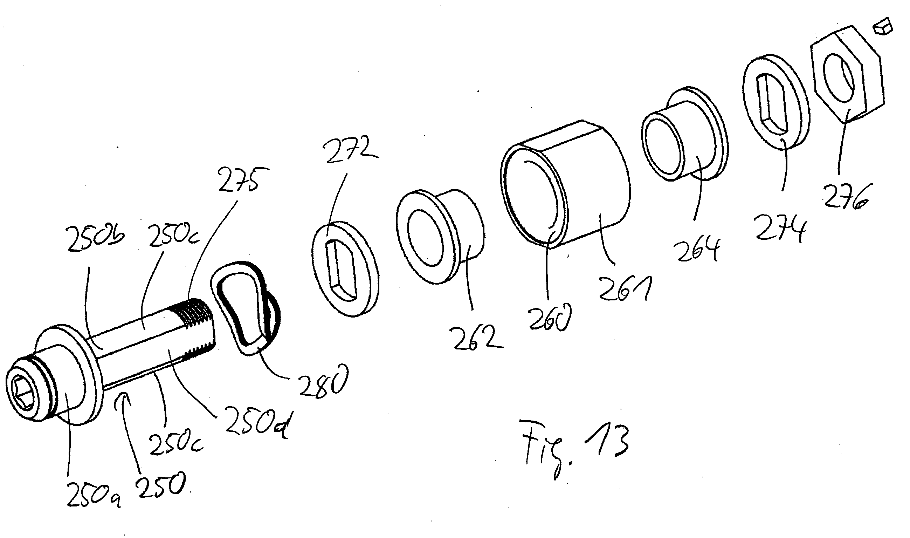

Als inneres Kupplungselement der Rollenkupplung 260 dient nicht die Drehwelle 250, sondern eine von zwei Hülsen 262 und 264 gebildete Hülsenanordnung, die axial in das hülsenartige äußere Kupplungselement mit seinen Rollelementen am Innenumfang eingesteckt sind. Das äußere Kupplungselement ist beispielsweise durch ein Presspassung in einer äußeren Stützhülse 261 aufgenommen, die einen von der Rotationssymmetrie abweichenden Außenumfang aufweist, beispielsweise mit zwei diametral gegenüberliegenden Flachseiten, wie in den Figuren 12 und 13 erkennbar. Die wieder als gestufte Druchgangsbohrung ausgeführte Aussparung 266 ist mit einem komplementären, nicht rotationssymmetrischen Innenumfang ausgeführt, so dass das äußere Kupplungselement der Rollenkupplung 260 vermittels der Stützhülse 261 in der Aussparung 266 gegen Verdrehung formschlüssig abgestützt ist, aber in axialer Richtung verschiebbar ist, um Vorspannkräfte der Kraftspeicheranordnung 280 mittels der Hülsen 262 und 264 von der Reibscheibe 272 zur Reibscheibe 274 zu übertragen, die an dem Schraubelement 276 axial abgestützt ist. Die Reibscheiben 272 und 274 weisen jeweils eine den Außenumfang des Drehwellenabschnitts 250b angepasste Durchgangsöffnung auf, durch die sich die Drehwelle erstreckt, so dass die Reibscheiben zur gemeinsamen Drehung mit der Drehwelle 250 verbunden sind, aber axial bewegbar sind.

Die axial in Richtung aufeinander zu gerichteten Reibflächen der Reibscheiben 272 und 274 sind jeweils mit einem Ringflächenabschnitt an einem flanschartigen Ende der Hülsen 262 und 264 reibschlüssig in Eingriff, wobei der Reibeingriff von den von der Wellenfeder 280 aufgebrachten Vorspannkräften und dementsprechend von der axialen Stellung des Schraubelements 276 auf der Drehwelle 250 abhängen.

Während beim ersten und beim zweiten Ausführungsbeispiel das äußere Kupplungselement der Rollenkupplung vermittels der Reibeinrichtung reibschlüssig an dem beweglichen Element gegen Drehung abgestützt ist, ist beim dritten Ausführungsbeispiel die Kettenführungsbaugruppe bzw. deren Drehwelle 250 reibschlüssig am inneren Kupplungselement der Rollenkupplung 260 zur gemeinsamen Drehung angekoppelt, wohingegen das äußere Kupplungselement drehfest im beweglichen Element 116 gehalten ist. Die Hülsen 262 und 264 entsprechen in ihrer Funktion den Hülsen 62 und 64 bzw. 162 und 164 der ersten beiden Ausführungsbeispielen nur in Bezug auf die Kraftübertragung der Vorspannkraft zwischen den auf entgegengesetzten axialen Seiten der Rollenkupplung angeordneten axialen Reibflächen. Die Hülsen 262 und 264 bilden hiervon abweichend auch ein Kupplungselement der Rollenkupplung. Entsprechende Abwandlungen sind aber auch für das erste und zweite Ausführungsbeispiel denkbar, nämlich dass diese Elemente 262 und 264 das äußere Kupplungselement bilden könnten, an dessen Innenumfang die Rollelemente angeordnet sind.

Man kann aber alternativ auch vorsehen, dass die angesprochenen Hülsen 262 und 264 der dritten Ausführungsform nur zur axialen Kraftübertragung und - mittels ihrer Flanschabschnitte - zur Bereitstellung der Reibflächen dienen und das dementsprechend die Rollenkupplung 250 ein gegenüber den Hülsen gesondertes inneres Kupplungselement in Hülsenform aufweist, welches mit den Hülsenelementen 262 und 264 beispielsweise im Presssitz in Eingriff steht, so dass die Hülsen drehfest mit dem inneren Kupplungselement verbunden sind. Diese Variante ist kompatibel mit der Darstellung der Einwegkupplung 260 in den Schnittansichten der Figuren, in denen keine innere Struktur der Einwegkupplung selbst zu erkennen ist. Entsprechende Einwegkupplungen sind als Zuliefererkomponenten einfach erhältlich, ebenso die schon angesprochenen Freilaufhülsen ohne eigenes inneres Kupplungselement, die mit einer geeigneten Drehwelle zu kombinieren sind.

Nach dem dritten Konstruktionsansatz sind bevorzugterweise zuerst die elastische Kraftfederanordnung, die Reibscheiben und die Einwegkupplung mit den angesprochenen Hülsenelementen an der Drehwelle zu montieren und mittels des Schraubelements 272 zu sichern, unter Einstellung des benötigten Reibeingriffs. Diese Baugruppe, gegebenenfalls schon gekoppelt mit der Zwischenscheibe 252 und der Käfigplatte 278 mittels der Schraube 254, wird dann durch Einschieben der Drehwelle 250 in die gestufte Aussparung 266 des beweglichen Elements 116 mit diesem verbunden, und die Drehwelle wird an dem der Kettenführungsbaugruppe entgegengesetzten Endabschnitt der Aussparung mittels eines Sprengrings 280 oder dergleichen gesichert. Für ein ästhetisches Äußeres mag man den in radialer Richtung erweiterten Aussparungsabschnitt, in den der Sprengring 280 aufgenommen ist, durch einen Deckel oder dergleichen verschließen. Das bei der Fertigung des Umwerfers als Einstellelement dienende Schraubelement 276 ist im Inneren des beweglichen Elements unzugänglich angeordnet, so dass unautorisierte Verstellungen der fabrikseitig vorgesehenen Einstellung verhindert sind. Eine Verklebung des Schraubelements mit der Drehwelle 250 kommt gleichwohl in Betracht.

Es sind diverse Abwandlungen des beschriebenen Ausführungsbeispiels denkbar. So kann das äußere Kupplungselement mit einer Rändelung am Außenumfang vorgesehen sein, so dass dieses ohne Bedarf für die zusätzliche Stützhülse in die Aussparung 266 aufgenommen sein kann, beispielsweise im Presssitz. Es ist allerdings eine gewisse axiale Beweglichkeit vorteilhaft, damit die Vorspannkraft der elastischen Kraftfederanordnung 280 auch auf die entfernt liegenden Reibflächen benachbart der Kettenführungsbaugruppe wirkt.

Anstelle einer Wellfederanordnung als Kraftspeichereinrichtung könnte auch eine Scheiben- oder Tellerfederanordnung vorgesehen werden. Man kann auch zusätzliche Reibflächen vorsehen, indem man einen Satz von Reibscheiben vorsieht, die axial abwechselnd entweder mit der Drehwelle 250 oder mit dem beweglichen Element drehfest sind. Anstelle des Schraubelements 276 könnte ein Abstützelement mit dem Endabschnitt der Drehwelle 250 im Presssitzeingriff stehen. Alle Merkmale, die für eine Drehkopplung einer Abweichung von einer Rotationssymmetrie bewirken, haben rein exemplarischen Charakter. Es sind diverse andere Ausgestaltungen möglich, die ebenfalls eine Drehkopplung ermöglichen, beispielsweise mit Keil- oder Stiftstrukturen und dergleichen, wie schon zu ersten Ausführungsbeispiel angesprochen. Dies gilt für alle Ausführungsbeispiele.

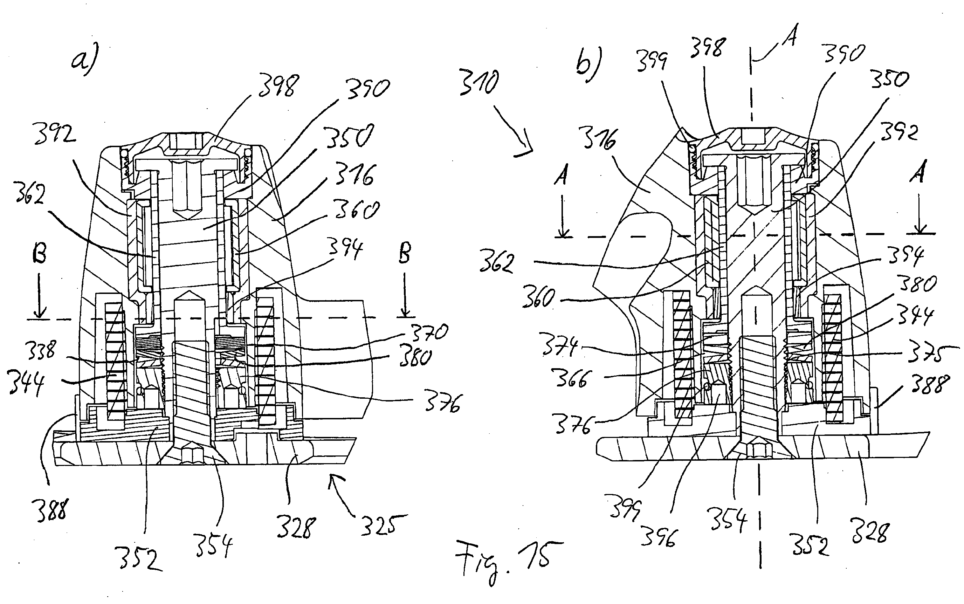

Ein einen vierten Konstruktionsansatz verfolgendes viertes Ausführungsbeispiel ist in den Figuren 15 bis 17 gezeigt. Es werden erneut nur die Unterschiede gegenüber den vorangehend beschriebenen Ausführungsbeispielen erläutert und ansonsten ausdrücklich auf die vorangehende Beschreibung Bezug genommen. Für identische oder analoge Bauteile werden die gleichen Bezugszeichen wie beim ersten Ausführungsbeispiel verwendet, jeweils vermehrt um 300.

Der vierte Konstruktionsansatz hat Gemeinsamkeiten mit dem dritten Konstruktionsansatz sowie auch mit dem zweiten Konstruktionsansatz.

Wie beim Ausführungsbeispiel der Figuren 6 bis 9 weist die Drehwelle 350 des vierten Ausführungsbeispiels an ihrem von der Kettenführungsbaugruppe 325 entfernten Ende einen radial vorstehenden Flanschabschnitt zur axialen Abstützung am beweglichen Element 316 auf und ist dementsprechend von der von der Kettenführungsbaugruppe 325 entfernten axialen Seite des beweglichen Elements 316 in die gestufte Aussparung 366 des beweglichen Elements eingeschoben. Wie in den Figuren gezeigt, kann diese axiale Abstützung vermittels eines gegenüber dem beweglichen Element 316 und der Drehwelle 350 gesonderten, als Ringelement ausgeführten Abstützelement 390 erfolgen, welches in einem radial geringfügig erweiterten axialen Endabschnitt der Aussparung 366 aufgenommen ist und axial an einer Ringstufe des beweglichen Elements und einer drehfest und axial fest in das bewegliche Element 316 integrierten Lagerhülse 392 abgestützt ist. Das bewegliche Element 316 kann um diese Lagerhülse 392 herum geformt sein.

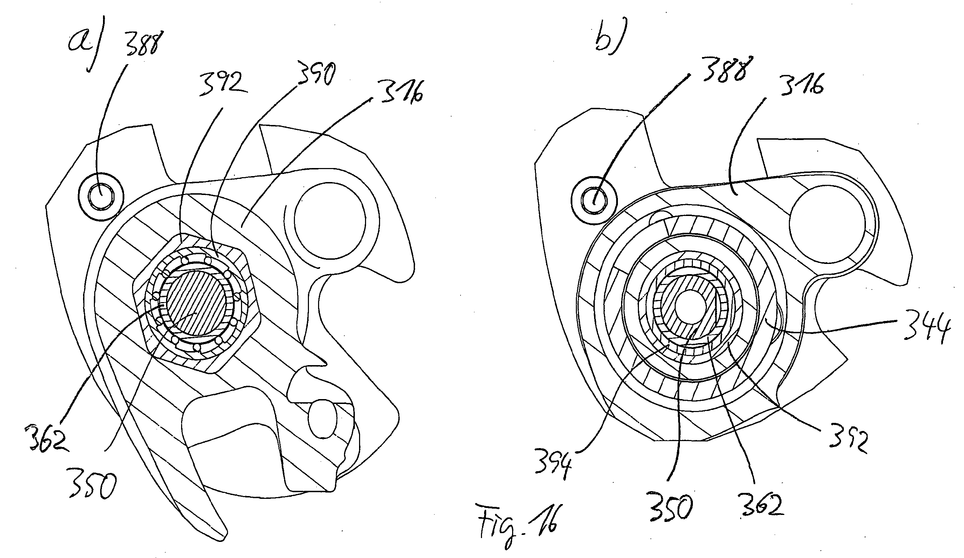

Die Lagerhülse 392 weist ausweislich Figur 15b) und Figur 16a) einen von der Kettenführungsbaugruppe 325 entfernteren Abschnitt größeren Durchmessers mit einem hexagonalen Außenquerschnitt auf, in den die Rollenkupplung 360 bzw. deren radial äußeres Kupplungselement im Presssitz drehfest aufgenommen ist. Dieser den hexagonalen Außenquerschnitt aufweisende Abschnitt der Lagerhülse 392 weist ausweislich der Figuren einen kreiszylindrischen Innenumfang auf, könnte aber auch mit Mitnahmeformationen am Innenumfang ausgeführt sein, die mit Gegen-Mitnahmeformationen am Außenumfang der Rollenkupplung bzw. dessen radial äußeren Kupplungselements formschlüssig eingreifen.

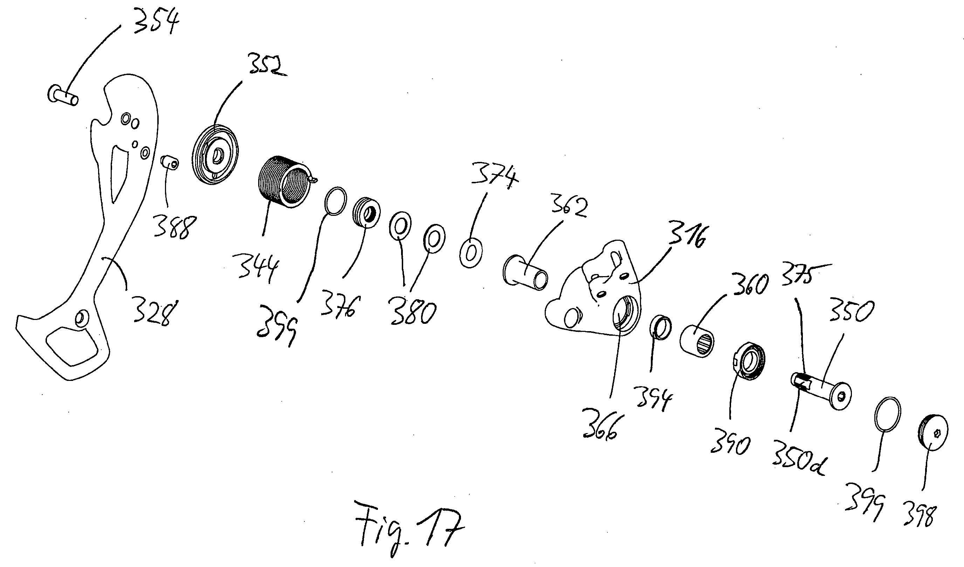

Ausweislich Figur 15a) und Figur 16b) weist die Lagerhülse 392 ferner einen zur Kettenführungsanordnung 325 axial näheren Abschnitt geringeren Durchmessers auf, welcher einen kreiszylindrischen Außenumfang sowie einen kreiszylindrischen Innenumfang aufweist und unter Vermittlung eines Lagerrings 394 zur Drehlagerung eines Hülsenelements 362 dient, welches das radial innere Kupplungselement der Rollenkupplung 360 ist und somit eine Funktion wie die Hülsenelemente 262, 264 des dritten Ausführungsbeispiels erfüllt. Wie diese Hülsenelemente weist das Hülsenelement 362 an seinem der Kettenführungsbaugruppe 325 axial näheren Ende einen radial vorstehenden Ringflansch auf, der eine axial gerichtete Reibfläche bereitstellt, die mit einer Gegen-Reibfläche einer Reibscheibe 374 in Reibschlusseingriff steht. Diese Reibscheibe 374 ist drehfest an der Drehwelle 350 angeordnet, wofür die Reibschreibe 374 mit einer nicht rotationssymmetrischen, beispielsweise D-förmigen, Durchgangsöffnung ausgeführt ist (vgl. Figur 17) und auf einem von der Rotationssymmetrie abweichenden Drehwellen-Abschnitt, beispielsweise mit einer Abflachung auf einer Seite der Drehwelle 350, sitzt. Diese Abflachung der Drehwelle 350 ist in Figur 17 mit 350d bezeichnet und erstreckt sich axial in einem mit einem Außengewinde 375 ausgeführten Abschnitt der Drehwelle, die ansonsten einen rotationssymmetrischen Außenumfang aufweist, der an den Innenumfang des Hülsenelements 362 so angepasst ist, dass die sich durch das Hülsenelement 362 erstreckende Drehwelle 350 und das Hülsenelement 362 relativ zueinander verdrehbar sind.

Auf das Außengewinde 375 ist das mit einem komplementären Innengewinde ausgeführte Schraubelement 376 aufgeschraubt, welches mit axial gerichteten, in Richtung zur Zwischenscheibe 352 axial offenen Werkzeugeingriffsöffnungen 396 ausgeführt ist. Zwischen der Reibscheibe 374 und dem als Einstellelement dienenden Schraubelement 376 ist die elastische Kraftspeicheranordnung 380 eingespannt, die beim gezeigten Ausführungsbeispiel von zwei Federscheiben, beispielsweise Tellerfederscheiben oder Wellfederscheiben, gebildet ist, die einerseits an einer Abstützfläche des Schraubelements 376 und andererseits an einer Abstützfläche der Reibscheibe 374 angreifen.

In einer funktionellen Betrachtung entspricht das vierte Ausführungsbeispiel im Wesentlichen dem dritten Ausführungsbeispiel, da die Drehwelle 350 reibschlüssig mit dem von dem Hülsenelement 362 gebildeten radial inneren Kupplungselement der Rollenkupplung 360 gekoppelt ist und das radial äußere Kupplungselement der Rollenkupplung drehfest im beweglichen Element 316 gehalten ist.

Für ein gefälliges Aussehen und auch zum Schutz gegen Einwirkung von Schmutz und Feuchtigkeit kann das von der Kettenführungsbaugruppe 325 entfernte Ende der als Durchgangsöffnung ausgeführten Aussparung 366 durch ein Deckelelement 398 verschlossen sein, welches einen Ringabschnitt mit einem Außengewinde aufweisen kann, welches in einen Ringabschnitt mit einem komplementären Innengewinde des Abstützelements 390 eingeschraubt sein kann. Hierzu kann das Deckelelement 328 mit einer Werkzeugeingriffsöffnung beispielsweise für einen Imbusschlüssel ausgeführt sein. Zur Abdichtung kann wenigstens ein O-Ring 399 zwischen dem Deckelelement 398, dem Abstützelement 390 und dem Innenumfang des beweglichen Elements 316 wirken. Auch am anderen axialen Ende der Aussparung 366 kann eine Abdichtung mittels wenigstens eines O-Rings 399 realisiert sein, welcher in einer Ringnut am Außenumfang des Schraubelements 376 aufgenommen sein kann und zwischen diesem Schraubelement und dem Innenumfang des beweglichen Elements 316 dichtend wirksam ist.

Wie bei den anderen Ausführungsbeispielen weist die Drehwelle 350 an ihrem der Kettenführungsbaugruppe 325 nahen Ende eine Schrauböffnung auf, die eine die Käfigplatte 328 der Kettenführungsbaugruppe 325 mit der Drehwelle 350 verbindende Befestigungsschraube 354 aufnimmt.

Die Ausbildung der Rollenkupplung 360 mit einem Klemmrampen am Innenumfang aufweisenden radial äußeren Kupplungselement 390, den üblichen Rollelementen und dem Hülsenelement 362 als radial inneres Kupplungselement ist in Figur 16a) gut zu erkennen.

Die Art und Weise des Zusammenbaus des Fahrradumwerfers 310 betreffend die angesprochenen Komponenten ergibt sich aus der Struktur und der notwendigen relativen Positionierung der Komponenten. Beim Zusammenbau erfolgt die Zufuhr zu dem beweglichen Element 316 bzw. in dessen Aussparung 366 aus axialen Richtungen gemäß der Explosionsansicht der Figur 17. Die Lagerhülse 392 ist bevorzugt integraler Bestandteil des beweglichen Elements 316.

Anzumerken ist, dass die Rollenkupplung 350, in Abweichung von dem bisher Ausgeführten, ein gegenüber dem Hülsenelement 362 gesondertes inneres Kupplungselement in Hülsenform aufweisen könnte, welches mit dem Hülsenelement 362 beispielsweise im Presssitz in Eingriff steht. Wie schon ausgeführt, sind entsprechende Einwegkupplungen als Zulieferkomponenten einfach erhältlich, ebenso wie die ebenfalls schon angesprochenen Freilaufhülsen ohne eigenes inneres Kupplungselement, die mit dem Hülsenelement 362 als in das radial innere Kupplungselement kombinierbar sind. Zu weiteren Abwandlungsmöglichkeiten gilt das zu den anderen Ausführungsbeispielen, speziell auch zum dritten Ausführungsbeispiel, Ausgeführte.

Bei allen Ausführungsbeispielen dient die Rollenkupplung dazu, dass die reibschlüssig erzeugte Gegenkraft gegen eine Verdrehung der Kettenführungsbaugruppe in der Kettenspannrichtung nicht auftritt, sondern nur in der der Kettenspannrichtung entgegengesetzten Schwenkrichtung der Kettenführungsbaugruppe. Die Rollenkupplung mit der Reibeinrichtung und der elastischen Kraftspeicheranordnung wirkt also als Gegenkrafterzeugungseinrichtung, mittels der auf die Kettenführungsbaugruppe einer der Drehung in der der Kettenspannrichtung entgegengesetzten Drehrichtung relativ zu dem beweglichen Element entgegenwirkende Gegenkraft ausübbar ist.

Durch die axial gerichteten Reibflächen kann besonders gut ein definierter Reibabschluss erreicht werden, durch entsprechende Positionierung des die Vorspannung der Kraftspeicheranordnung axial am beweglichen Element (erstes und zweites Ausführungsbeispiel) bzw. an der Drehwelle (drittes und viertes Ausführungsbeispiel) abstützenden Abstützelements, welches bei den Ausführungsbeispielen durch das jeweilige Schraubelement 76 bzw. 176 bzw. 276 bzw. 376 gebildet ist. Die als solches als vorteilhaft angesehenen axialen Reibflächen sind mit einer Einwegkupplung in Form der Rollenkupplung kombiniert, ohne große radiale Abmessungen für das bewegliche Element erforderlich zu machen. Hierzu sind die axialen Reibflächen gegenüber den Rollelementen axial versetzt und sich radial überlappend mit der Rollenkupplung angeordnet. Im Falle des dritten und vierten Ausführungsbeispiels überlappen sich die axial gerichteten Reibflächen vollständig mit dem inneren Kupplungselement, den Rollelementen und im Wesentlichen vollständig auch mit dem äußeren Kupplungselement.

## Patentansprüche

1. Hinterer Fahrradumwerfer, umfassend:
- ein Basiselement (12; 212), welches an einem Fahrradrahmen in Zuordnung zu einem hinteren Fahrrad-Laufrad des Fahrrads montierbar ist;
- ein bewegliches Element (16; 116; 216; 312), welches mit dem Basiselement beweglich gekoppelt ist;
- eine Kettenführungsbaugruppe (25; 125; 225; 325), die um eine Drehachse (A) drehbar mit dem beweglichen Element verbunden ist;
- eine der Kettenführungsbaugruppe zugeordnete elastische Kraftspeichereinrichtung (44; 144; 244; 344), mittels der die Kettenführungsbaugruppe in eine erste Drehrichtung relativ zu dem beweglichen Element vorspannbar ist; und
- eine Gegenkrafterzeugungseinrichtung (38; 138; 238; 338), welche eine Freilaufkupplungseinrichtung (60; 160; 260; 360) sowie eine Reibeinrichtung (70; 170; 270; 370) und eine der Reibeinrichtung zugeordnete oder zugehörige elastische Kraftspeichereinrichtung (80; 180; 280; 380) umfasst und mittels der auf die Kettenführungsbaugruppe eine einer Drehung in einer der ersten Drehrichtung entgegengesetzten zweiten Drehrichtung relativ zu dem beweglichen Element entgegenwirkende Gegenkraft ausübbar ist;
wobei die Freilaufkupplungseinrichtung eine Rollenkupplung (60; 160; 260; 360) aufweist und die Reibeinrichtung (70; 170; 270; 370) in gegenseitigem Reibeingriff stehende oder in gegenseitigen Reibeingriff bringbare, bezogen auf die Drehachse (A) im Wesentlichen axial gerichtete Reibflächen aufweist, die mittels der der Reibeinrichtung zugeordneten oder zugehörigen elastischen Kraftspeichereinrichtung gegeneinander vorgespannt oder vorspannbar sind; **dadurch gekennzeichnet,**
**dass** die Reibflächen bezogen auf die Drehachse (A), gegenüber zwischen einem radial inneren Kupplungselement und einem radial äußeren Kupplungselement der Rollenkupplung (60; 160; 260; 360) wirksamen Rollelementen der Rollenkupplung, axial versetzt sind.

2. Hinterer Fahrradumwerfer nach Anspruch 1, **dadurch gekennzeichnet, dass** ein radialer Erstreckungsbereich der Rollelemente sich mit einem radialen Erstreckungsbereich der Reibflächen überlappt.

3. Hinterer Fahrradumwerfer nach Anspruch 1 oder 2, **dadurch gekennzeichnet, dass** die Reibflächen sich mit einem von dem inneren Kupplungselement und dem äußeren Kupplungselement bezogen auf die Drehachse radial überlappend angeordnet sind.

4. Hinterer Fahrradumwerfer nach einem der Ansprüche 1 bis 3, **dadurch gekennzeichnet, dass** die Kettenführungsbaugruppe (25; 125; 225; 325) mittels einer im beweglichen Element (16; 116; 216; 316) um die Drehachse (A) drehbar gelagerten, gewünschtenfalls das innere Kupplungselement der Rollenkopplung (60; 160) bildenden Drehwelle (50; 150; 250; 350) mit dem beweglichen Element (16; 116; 216; 316) verbunden ist.

5. Hinterer Fahrradumwerfer nach Anspruch 4, **dadurch gekennzeichnet, dass** die Drehwelle (50; 150; 250; 350) in einer gestuft ausgeführten, als Durchgang zwischen entgegengesetzten axialen Seiten des beweglichen Elements ausgeführten Aussparung (66; 166; 266; 366) drehbar gelagert ist und vermittels wenigstens einer sich in radialer Richtung erstreckenden, mit der Drehwelle einteiligen oder daran fixierten Abstützformation axial in Bezug auf wenigstens eine axiale Richtung direkt oder indirekt an einer zugeordneten Abstützformation des beweglichen Elements (16; 116; 216; 316) abgestützt ist.

6. Hinterer Fahrradumwerfer nach Anspruch 5, **dadurch gekennzeichnet, dass** die Drehwelle mittels einer im Abstand von der Kettenführungsbaugruppe vorgesehenen, mit der Drehwelle (50; 150; 250; 350) einteiligen oder daran festgelegten Abstützformation an dem beweglichen Element (16; 116; 216; 316) in Bezug auf eine erste axiale Richtung axial abgestützt ist, gewünschtenfalls vermittels wenigstens eines gegenüber dem beweglichen Element gesonderten, in die Aussparung (360) aufgenommenen Abstützelements (390).

7. Hinterer Fahrradumwerfer nach Anspruch 6, **dadurch gekennzeichnet, dass** die vorzugsweise mit der Drehwelle einteilige, beispielsweise als Flanschabschnitt ausgeführte Abstützformation in einem von der Kettenführungsbaugruppe (125; 225; 325) fernen axialen Endbereich der Drehwelle vorgesehen ist.

8. Hinterer Fahrradumwerfer nach einem der Ansprüche 5 bis 7, **dadurch gekennzeichnet, dass** ein Element (28; 128; 328) der Kettenführungsbaugruppe (25; 125; 325) als Abstützformation zum axialen Abstützen der Drehwelle (50; 150; 350) an dem beweglichen Element (16; 116; 316) in Bezug auf eine axiale Richtung, insbesondere in Bezug auf eine zur ersten axialen Richtung entgegengesetzte zweite axiale Richtung, dient.

9. Hinterer Fahrradumwerfer nach einem der Ansprüche 1 bis 8, **dadurch gekennzeichnet, dass** die Reibflächen bezogen auf die Drehachse (A) gegenüber wenigstens einem von dem inneren Kupplungselement und dem äußeren Kupplungselement axial versetzt sind.

10. Hinterer Fahrradumwerfer nach einem der Ansprüche 1 bis 9, **dadurch gekennzeichnet, dass** die Reibflächen erste Reibflächen umfassen, die mittels der der Reibeinrichtung zugeordneten oder zugehörigen elastischen Kraftspeichereinrichtung (44; 144; 244) gegeneinander vorspannbar sind, dass die Reibflächen gegenüber den ersten Reibflächen der Kettenführungsbaugruppe (25; 125; 225) näher benachbarte zweite Reibflächen umfassen, die mittels der der Reibeinrichtung zugeordneten oder zugehörigen elastischen Kraftspeichereinrichtung (44; 144; 244) gegeneinander vorspannbar sind, und dass die Rollelemente der Rollenkupplung (60; 160; 260) bezogen auf die Drehachse axial zwischen einerseits den ersten Reibflächen und anderseits den zweiten Reibflächen angeordnet sind.

11. Hinterer Fahrradumwerfer nach Anspruch 10, **dadurch gekennzeichnet, dass** die der Reibeinrichtung zugeordnete oder zugehörige Kraftspeichereinrichtung einen ersten elastischen Kraftspeicher und einen zweiten elastischen Kraftspeicher umfasst, wobei die Rollelemente der Rollenkupplung bezogen auf die Drehachse axial zwischen einerseits dem ersten Kraftspeicher und andererseits dem zweiten Kraftspeicher angeordnet sind.

12. Hinterer Fahrradumwerfer nach Anspruch 10, **dadurch gekennzeichnet, dass** die der Reibeinrichtung zugeordnete oder zugehörige elastische Kraftspeichereinrichtung (44; 144) in enger Nachbarschaft zu den ersten Reibflächen angeordnet ist und vermittels einer Kraftübertragungseinrichtung (62, 64; 162, 164) auf die zweiten Reibflächen wirkt, oder dass die der Reibeinrichtung (244) zugeordnete oder zugehörige elastische Kraftspeichereinrichtung in enger Nachbarschaft zu den zweiten Reibflächen angeordnet ist und vermittels einer Kraftübertragungseinrichtung (262, 264) auf die ersten Reibfläche wirkt.

13. Hinterer Fahrradumwerfer nach Anspruch 12, **dadurch gekennzeichnet, dass** eines von dem inneren Kupplungselement und dem äußeren Kupplungselement (262, 264) die Kraftübertragungseinrichtung bildet oder dieser zugehörig ist oder/und dass wenigstens ein sich radial innerhalb oder radial außerhalb der Rollenkupplung axial erstreckendes und gegenüber dem inneren Kupplungselement und dem äußeren Kupplungselement gesondertes Abstützelement (62, 64; 162, 164; 262, 264) die Kraftübertragungseinrichtung bildet oder dieser zugehörig ist.

14. Hinterer Fahrradumwerfer nach einem der Ansprüche 1 bis 9, dass die Reibflächen bezogen auf eine die Rollenkupplung (360) schneidende, zur Drehachse (A) orthogonale Bezugsebene auf einer axialen Seite der Bezugsebene angeordnet sind, vorzugsweise axial versetzt gegenüber den Rollelementen der Rollenkupplung (360), höchstvorzugsweise axial versetzt gegenüber der Rollenkupplung (360).

15. Hinterer Fahrradumwerfer nach Anspruch 14, **dadurch gekennzeichnet, dass** die Reibflächen auf der der Kettenführungsbaugruppe (325) näheren axialen Seite der Bezugsebene angeordnet sind.

16. Hinterer Fahrradumwerfer nach Anspruch 14 oder 15, **dadurch gekennzeichnet, dass** die der Reibeinrichtung (370) zugeordnete oder zugehörige elastische Kraftspeichereinrichtung (380) in enger Nachbarschaft zu den Reibflächen auf der gleichen axialen Seite der Bezugsebene angeordnet ist.

17. Hinterer Fahrradumwerfer nach einem der Ansprüche 1 bis 16, **gekennzeichnet durch** wenigsten ein die Rollenkupplung (60; 160) radial außen umschließendes, mit dem äußeren Kupplungselement zur gemeinsamen Drehung gekoppeltes oder koppelbares und gewünschtenfalls als Abstützelement der Kraftübertragungseinrichtung dienendes Hülsenelement (62, 64; 162, 164) oder/und **gekennzeichnet durch** wenigstens ein die Drehwelle (250, 350) radial umschließendes, mit der Drehwelle gewünschtenfalls zur gemeinsamen Drehung gekoppeltes oder koppelbares Hülsenelement (262, 264; 362), welches von der Rollenkupplung (260; 360) radial außen umschlossen wird und gewünschtenfalls als Abstützelement der Kraftübertragungseinrichtung dient oder welches das innere Kupplungselement der Rollenkupplung (260; 360) bildet.

18. Hinterer Fahrradumwerfer nach einem der Ansprüche 1 bis 17, **dadurch gekennzeichnet, dass** eines (262, 264) der Kupplungselemente der Rollenkupplung (260) oder ein/das die Rollenkupplung (60; 160) oder die Drehwelle (250) radial außen umschließendes Hülsenelement (62, 64; 162, 164; 262, 264; 362) einen eine Reibfläche der axial gerichteten Reibflächen bzw. der ersten oder zweiten Reibflächen bildenden, vorzugsweise als Flanschabschnitt ausgeführten Endabschnitt aufweist.

19. Hinterer Fahrradumwerfer nach Anspruch 18, **dadurch gekennzeichnet, dass** das die Drehwelle (360) radial außen umschließende Hülsenelement (362) an einem zu dem die Reibfläche bildenden Endabschnitt entgegengesetzten Endabschnitt an einer Abstützformation der Drehwelle (350) axial abgestützt ist, wobei diese Abstützformation vorzugsweise auch zum direkten oder indirekten axialen Abstützen der Drehwelle (350) an dem beweglichen Element (316) dient.

20. Hinterer Fahrradumwerfer nach einem der Ansprüche 1 bis 19, **dadurch gekennzeichnet, dass** wenigstens eine drehfest im beweglichen Element (16; 116) festgelegte oder festlegbare Scheibe oder Ringscheibe (72, 74; 172, 174) oder/und wenigstens eine innere Fläche des beweglichen Elements eine Reibfläche der axial gerichteten Reibflächen bzw. der ersten oder zweiten Reibflächen bildet oder dass wenigstens eine mit der Drehwelle (250; 350) zur gemeinsamen Drehung gekoppelte oder koppelbare Scheibe oder Ringscheibe (272, 274; 374) oder/und wenigstens eine Fläche eines radial vorstehenden Abschnitts der Drehwelle eine Reibfläche der axial gerichteten Reibflächen bzw. der ersten oder zweiten Reibflächen bildet.

21. Hinterer Fahrradumwerfer nach einem der Ansprüche 1 bis 20, **dadurch gekennzeichnet, dass** das äußere Kupplungselement drehfest oder vermittels der Reibflächen reibschlüssig mit dem beweglichen Element (16; 116; 216; 316) gekoppelt ist.

22. Hinterer Fahrradumwerfer nach einem der Ansprüche 1 bis 21, **dadurch gekennzeichnet, dass** die Drehwelle (50; 150; 250; 350) das innere Kupplungselement bildet oder drehfest oder vermittels der Reibflächen reibschlüssig mit dem vorzugsweise von wenigstens einem Hülsenelement (262, 264; 362) gebildeten inneren Kupplungselement gekoppelt ist.

23. Hinterer Fahrradumwerfer nach einem der Ansprüche 1 bis 22, **dadurch gekennzeichnet, dass** das äußere Kupplungselement vermittels der Reibflächen reibschlüssig mit dem beweglichen Element (16; 116) gekoppelt ist und die Drehwelle (50; 150) das innere Kupplungselement bildet oder drehfest mit diesem gekoppelt ist oder dass das äußere Kupplungselement drehfest mit dem beweglichen Element (216; 316) gekoppelt ist und die Drehwelle (250; 350) vermittels der Reibflächen reibschlüssig mit dem inneren Kupplungselement gekoppelt ist.

24. Hinterer Fahrradumwerfer nach einem der Ansprüche 1 bis 23, **dadurch gekennzeichnet, dass** ein definierter Spannungszustand der der Reibeinrichtung zugeordneten oder zugehörigen, vorzugsweise als Wellfeder- oder Tellerfederanordnung ausgeführten elastischen Kraftspeichereinrichtung (44; 144; 244; 344) bei der Herstellung des Fahrradumwerfers mittels eines axial relativ zu wenigstens einem von dem beweglichen Element und der Drehwelle definiert innerhalb eines vorgegebenen axialen Einstellbereichs positionierbaren, axial abstützbaren Abstützelement eingestellt ist, vorzugsweise in Form eines beispielsweise als Schraubelement (76; 176; 276; 376) ausgeführten Einstellelements.

25. Hinterer Fahrradumwerfer nach Anspruch 24, **dadurch gekennzeichnet, dass** die der Reibeinrichtung zugeordnete oder zugehörige elastische Kraftspeichereinrichtung (80) axial zwischen einerseits der Kettenführungsbaugruppe (25) und andererseits dem Abstützelement (76) angeordnet ist, und dabei vorzugsweise axial zwischen einerseits der Rollenkupplung (60) und andererseits dem Abstützelement (76) angeordnet ist.

26. Hinterer Fahrradumwerfer nach Anspruch 24, **dadurch gekennzeichnet, dass** das Abstützelement (176; 276; 376) axial zwischen einerseits der Kettenführungsbaugruppe (125; 225; 325) und andererseits der Rollenkupplung (160; 260; 360) angeordnet ist.

27. Hinterer Fahrradumwerfer nach Anspruch 26, **dadurch gekennzeichnet, dass** die der Reibeinrichtung zugeordnete oder zugehörige elastische Kraftspeichereinrichtung (180) axial zwischen einerseits der Rollenkupplung (160; 360) und andererseits dem Abstützelement (176; 376) angeordnet ist.

28. Hinterer Fahrradumwerfer nach Anspruch 26, **dadurch gekennzeichnet, dass** die Rollenkupplung (260) axial zwischen einerseits der der Reibeinrichtung zugeordneten oder zugehörigen elastischen Kraftspeichereinrichtung (280) und andererseits dem Abstützelement (276) angeordnet ist.

29. Hinterer Fahrradumwerfer nach einem der Ansprüche 24 bis 28, **dadurch gekennzeichnet, dass** das Abstützelement als Einstellelement (76; 176; 276; 376) ausgeführt ist und an einem Außengewinde mit einem Innengewinde des beweglichen Elements (16; 116) oder an einem Innengewinde mit einem Außengewinde der Drehwelle (250; 350) in Eingriff steht.

30. Hinterer Fahrradumwerfer nach einem der Ansprüche 24 bis 29, **dadurch gekennzeichnet, dass** das Abstützelement bzw. Einstellelement (16; 116; 216; 316) gegen Verstellung gesichert oder/und verborgen und vorzugsweise unzugänglich angeordnet ist.

31. Hinterer Fahrradumwerfer nach einem der Ansprüche 1 bis 30, **dadurch gekennzeichnet, dass** die der Kettenführungsbaugruppe (25; 125; 225; 325) zugeordnete elastische Kraftspeichereinrichtung (44; 144; 244; 344) bezogen auf die Drehachse (A) radial außerhalb eines radialen Erstreckungsbereichs der Reibflächen und sich mit zumindest einigen der Reibflächen, vorzugsweise den zweiten Reibflächen, oder/und dem Abstützelement bzw. Einstellelement (176; 276; 376) oder/und der der Reibeinrichtung zugeordneten oder zugehörigen elastischen Kraftspeichereinrichtung (180; 380) axial überlappend und dieses bzw. diese radial umschließend angeordnet ist.

32. Vormontageeinheit zur Fertigung eines hinteren Fahrradumwerfers (10) nach wenigstens einem der Ansprüche 1 bis 31, umfassend:
- ein bewegliches Element (16), welches mit einem Basiselement (12) beweglich gekoppelt oder koppelbar ist;
- eine Drehwelle (50), die mit einer Kettenführungsbaugruppe (25) verbindbar ist und um eine Drehachse (A) drehbar in einer gestuft ausgeführten, als Durchgang zwischen entgegengesetzten axialen Seiten des beweglichen Elements ausgeführten Aussparung (66) des beweglichen Elements gelagert und in einer ersten der axialen Richtungen durch das bewegliche Element axial abgestützt oder abstützbar ist, gewünschtenfalls unter Vermittlung wenigstens eines in die Aussparung aufgenommen Abstützelements;
- eine Freilaufkupplungseinrichtung (60) und eine Reibeinrichtung (70), die in der Aussparung die Drehwelle (50) radial umschließend und gewünschtenfalls die Drehwelle als Kupplungselement der Freilaufkupplungseinrichtung einbeziehend angeordnet sind und mit denen unter Einbeziehung einer der Reibeinrichtung zugeordneten elastischen Kraftspeichereinrichtung (80) eine Gegenkrafterzeugungseinrichtung (38) bildbar ist,
wobei die Freilaufkupplungseinrichtung eine Rollenkupplung (60) aufweist und die Reibeinrichtung (70) in gegenseitigem Reibeingriff stehende oder in gegenseitigen Reibeingriff bringbare, bezogen auf die Drehachse (A) im Wesentlichen axial gerichtete Reibflächen aufweist, die bezogen auf die Drehachse gegenüber zwischen einem radial inneren Kupplungselement und einem radial äußeren Kupplungselement der Rollenkupplung wirksamen Rollelementen der Rollenkupplung (60) axial versetzt sind;
wobei die Drehwelle (50) an einem ersten axialen Ende mit der Kettenführungsbaugruppe (25), vorzugsweise unter Erzielung einer mittelbaren axialen Abstützung oder Abstützbarkeit für die Drehwelle in einer der ersten axialen Richtung entgegengesetzten zweiten axialen Richtung, verbindbar ist und in Nachbarschaft zu einem zu dem ersten Ende entgegengesetzten zweiten Ende der Drehwelle (50) in der Aussparung die elastische Kraftspeichereinrichtung (80) positionierbar und durch ein in der Aussparung definiert positionierbares und axial festlegbares, beispielsweise mit einem Außengewinde in ein Innengewinde der Aussparung einschraubbares, Einstellelement (76) spannbar ist, um die Reibflächen in den gegenseitigen Reibeingriff zu spannen.

33. Vormontageeinheit zur Fertigung eines hinteren Fahrradumwerfers (110) nach wenigstens einem der Ansprüche 1 bis 31, umfassend:
- ein bewegliches Element (116), welches mit einem Basiselement beweglich gekoppelt oder koppelbar ist und eine gestuft ausgeführte Aussparung (166) aufweist, die als Durchgang zwischen bezogen auf eine Achse entgegengesetzten axialen Seiten des beweglichen Elements ausgeführt ist und in der eine mit einer Kettenführungsbaugruppe (125) verbindbare Drehwelle (150) um eine der Achse entsprechende Drehachse (A) drehbar gelagert oder lagerbar und in einer ersten der axialen Richtungen durch das bewegliche Element axial abgestützt oder abstützbar ist, gewünschtenfalls unter Vermittlung wenigstens eines in die Aussparung aufgenommen Abstützelements;
- eine Freilaufkupplungseinrichtung (160) oder zumindest eine Teileinrichtung der Freilaufkupplungseinrichtung (160) sowie eine Reibeinrichtung (170) mit einer der Reibeinrichtung zugeordneten oder zugehörigen elastischen Kraftspeichereinrichtung (180), die in der Aussparung (166) einen radial innen liegenden Durchgang für die gewünschtenfalls als Kupplungselement der Freilaufkupplungseinrichtung einzubeziehende oder einbezogene, in die Aussparung einschiebbare oder eingeschobene Drehwelle (150) freilassend angeordnet sind, zum Bilden einer Gegenkrafterzeugungseinrichtung (138), wobei die Freilaufkupplungseinrichtung bzw. die Teileinrichtung eine Rollenkupplung (160) bzw. zumindest ein äußeres Kupplungselement der Rollenkupplung (160) mit daran radial innen gehaltenen Rollelementen umfasst und die Reibeinrichtung (170) in gegenseitigem Reibeingriff stehende oder in gegenseitigen Reibeingriff bringbare, bezogen auf die Drehachse (A) im Wesentlichen axial gerichtete Reibflächen aufweist, die mittels der der Reibeinrichtung zugehörigen oder zugeordneten elastischen Kraftspeichereinrichtung (180) gegeneinander vorspannbar sind, wobei die Reibflächen bezogen auf die Drehachse gegenüber zwischen einem radial inneren Kupplungselement und einem radial äußeren Kupplungselement der Rollenkupplung wirksamen Rollelementen der Rollenkupplung (160) axial versetzt sind;
wobei in einem ersten axialen Endbereich der Aussparung (166) ein einen der Drehwelle zugeordneten Durchgang aufweisendes Einstellelement (176) in der Aussparung definiert positioniert und axial festgelegt ist, beispielsweise mit einem Außengewinde in ein Innengewinde der Aussparung eingeschraubt ist, welches die elastische Kraftspeichereinrichtung (180) spannt, um die Reibflächen in den gegenseitigen Reibeingriff zu spannen; und
wobei die Drehwelle (250) in die Aussparung (166) von einem zum ersten Endbereich entgegengesetzten Endbereich der Aussparung her in diese einschiebbar oder eingeschoben ist und die eingeschobene Drehwelle (250) an einem im ersten axialen Endbereich angeordneten Ende mit der Kettenführungsbaugruppe (125), vorzugsweise unter Erzielung einer mittelbaren axialen Abstützung oder Abstützbarkeit für die Drehwelle in einer der ersten axialen Richtung entgegengesetzten zweiten axialen Richtung, verbindbar ist.

34. Hinterer Fahrradumwerfers nach wenigstens einem der Ansprüche 1 bis 31, vorzugsweise hergestellt aus einer Vormontageeinheit nach Anspruch 32 oder 33, **dadurch gekennzeichnet, dass** das äußere Kupplungselement über die Reibflächen reibschlüssig mit dem beweglichen Element (16; 116) gekoppelt ist, zur Erzeugung von einer Verdrehung des äußeren Elements entgegenwirkenden Gegenkräften, und dass die/eine Drehwelle (50; 150) das innere Kupplungselement bildet oder zu diesem drehfest ist.

35. Vormontageeinheit zur Fertigung eines hinteren Fahrradumwerfers (210) nach wenigstens einem der Ansprüche 1 bis 31, umfassend:
- eine Drehwelle (250), welche an einem ersten Ende mit einer Kettenführungsbaugruppe (225) verbindbar ist, um diese mittels der Drehwelle um eine Drehachse (A) drehbar in einer gestuft ausgeführten, einen Durchgang zwischen entgegengesetzten axialen Seiten eines beweglichen Elements (210) bildenden Aussparung (266) des mit einem Basiselement (212) beweglich gekoppelten oder koppelbaren beweglichen Elements zu lagern;
- eine Freilaufkupplungseinrichtung (260) und eine Reibeinrichtung (270) mit einer der Reibeinrichtung zugeordneten oder zugehörigen elastischen Kraftspeichereinrichtung (280), die die Drehwelle (250) radial umschließend und gewünschtenfalls die Drehwelle als Kupplungselement der Freilaufkupplungseinrichtung einbeziehend an dieser angeordnet sind, zum Bilden einer Gegenkrafterzeugungseinrichtung (238),
wobei die Freilaufkupplungseinrichtung eine Rollenkupplung (260) aufweist und die Reibeinrichtung (270) in gegenseitigem Reibeingriff stehende oder in gegenseitigen Reibeingriff bringbare, bezogen auf die Drehachse (A) im Wesentlichen axial gerichtete Reibflächen aufweist, die mittels der der Reibeinrichtung zugeordneten oder zugehörigen elastischen Kraftspeichereinrichtung (280) gegeneinander vorspannbar sind, wobei die Reibflächen bezogen auf die Drehachse (A) gegenüber zwischen einem radial inneren Kupplungselement und einem radial äußeren Kupplungselement der Rollenkupplung wirksamen Rollelementen der Rollenkupplung axial versetzt sind;
wobei in Nachbarschaft zu einem ersten axialen Ende der Drehwelle (250) ein Einstellelement (276) an der Drehwelle definiert positioniert und axial festgelegt ist, beispielsweise mit einem Innengewinde an einem Innenumfang auf ein Außengewinde der Drehwelle (250) aufgeschraubt ist, welches die elastische Kraftspeichereinrichtung (250) spannt, um die Reibflächen in den gegenseitigen Reibeingriff zu spannen;
wobei die Drehwelle (250) an dem ersten axialen Ende mit der Kettenführungsbaugruppe (225) verbindbar ist und die Drehwelle (250) mit dem beweglichen Element (216) zusammensetzbar ist, indem die Drehwelle (250) von einer ersten axialen Seite des beweglichen Elements her mit einem zum ersten Ende entgegengesetzten zweiten Ende voran in die Aussparung (266) eingeschoben und an einem dem zweiten Ende benachbarten Endbereich von der zur ersten axialen Seite entgegengesetzten zweiten axialen Seite des beweglichen Elements (216) her an dem beweglichen Element gegen ein Herausziehen aus der Aussparung (266) gesichert wird.

36. Vormontageeinheit zur Fertigung eines hinteren Fahrradumwerfers (310) nach wenigstens einem der Ansprüche 1 bis 31, umfassend:
- ein bewegliches Element (316), welches mit einem Basiselement beweglich gekoppelt oder koppelbar ist und eine gestuft ausgeführte Aussparung (366) aufweist, die als Durchgang zwischen bezogen auf eine Achse entgegengesetzten axialen Seiten des beweglichen Elements ausgeführt ist und in der eine mit einer Kettenführungsbaugruppe (325) verbindbare Drehwelle (350) um eine der Achse entsprechende Drehachse (A) drehbar gelagert und in einer ersten der axialen Richtungen durch das bewegliche Element axial abgestützt oder abstützbar ist, gewünschtenfalls unter Vermittlung wenigstens eines in die Aussparung aufgenommen Abstützelements (390);
- eine Freilaufkupplungseinrichtung (360) und eine Reibeinrichtung (370) mit einer der Reibeinrichtung zugeordneten oder zugehörigen elastischen Kraftspeichereinrichtung (380), die die Drehwelle (350) radial umschließend und gewünschtenfalls die Drehwelle als Kupplungselement der Freilaufkupplungseinrichtung einbeziehend an dieser angeordnet sind, zum Bilden einer Gegenkrafterzeugungseinrichtung (338),
wobei die Freilaufkupplungseinrichtung eine Rollenkupplung (360) aufweist und die Reibeinrichtung (370) in gegenseitigem Reibeingriff stehende oder in gegenseitigen Reibeingriff bringbare, bezogen auf die Drehachse (A) im Wesentlichen axial gerichtete Reibflächen aufweist, die mittels der der Reibeinrichtung zugeordneten oder zugehörigen elastischen Kraftspeichereinrichtung (380) gegeneinander vorspannbar sind, wobei die Reibflächen bezogen auf die Drehachse (A) gegenüber zwischen einem radial inneren Kupplungselement und einem radial äußeren Kupplungselement der Rollenkupplung wirksamen Rollelementen der Rollenkupplung axial versetzt sind;
wobei in Nachbarschaft zu einem ersten axialen Ende der Drehwelle (350) ein Einstellelement (376) an der Drehwelle definiert positioniert und axial festgelegt ist, beispielsweise mit einem Innengewinde an einem Innenumfang auf ein Außengewinde der Drehwelle (350) aufgeschraubt ist, welches die elastische Kraftspeichereinrichtung (350) spannt, um die Reibflächen in den gegenseitigen Reibeingriff zu spannen;
wobei die Drehwelle (350) an dem ersten axialen Ende mit der Kettenführungsbaugruppe (25), vorzugsweise unter Erzielung einer mittelbaren axialen Abstützung oder Abstützbarkeit für die Drehwelle in einer der ersten axialen Richtung entgegengesetzten zweiten axialen Richtung, verbindbar ist.

37. Hinterer Fahrradumwerfer nach einem der Ansprüche 1 bis 31, vorzugsweise hergestellt aus einer Vormontageeinheit nach Anspruch 35 oder 36, **dadurch gekennzeichnet, dass** das äußere Kupplungselement drehfest zu dem beweglichen Element (216; 316) ist, vorzugsweise aufgrund einer Formschlußverbindung, und dass die/eine Drehwelle (250; 350) mit dem inneren Kupplungselement über die Reibflächen reibschlüssig gekoppelt ist zur Übertragung von Drehmitnahmekräften.

38. Hinterer Fahrradumwerfers nach wenigstens einem der Ansprüche 1 bis 31 oder nach Anspruch 37, vorzugsweise hergestellt aus einer Vormontageeinheit nach Anspruch 35, **dadurch gekennzeichnet, dass** die Drehwelle (250) mittels eines vorzugsweise lösbaren Haltemittels (280), beispielsweise mittels eines Sprengrings (280), an dem beweglichen Element (216) gegen ein Herausziehen aus der Aussparung (266) gesichert ist, welcher die Drehwelle in einer ersten der axialen Richtungen an dem beweglichen Element (216) axial abstützt, gewünschtenfalls unter Vermittlung wenigstens eines in die Aussparung aufgenommen Abstützelements.

39. Hinterer Fahrradumwerfer nach Anspruch 37 oder 38, **dadurch gekennzeichnet, dass** die Drehwelle (250; 350) vermittels der Kettenführungsbaugruppe (225; 325) oder/und vermittels eines Anschlags der Drehwelle (250) innerhalb der Aussparung an dem beweglichen Element (216; 316) in einer der ersten axialen Richtung entgegengesetzten zweiten axialen Richtung abgestützt oder abstützbar ist.

40. Verfahren zum Herstellen eines hinteren Fahrradumwerfers nach einem der Ansprüche 1 bis 31 oder nach einem der Ansprüche 24, 37 bis 39, umfassend:
- Herstellen einer Vormontageeinheit nach einem der Ansprüche 32, 33, 35 und 36;
- Kombinieren der Vormontageeinheit mit fehlenden Komponenten zum Bilden des Fahrradumwerfers (10; 110; 210; 310).

## Claims

1. Rear bicycle gear changer, comprising:
- a base element (12; 212), which can be mounted on a vehicle frame in association with a rear bicycle road wheel of the bicycle;
- a movable element (16; 116; 216; 312), which is coupled movably to the base element;
- a chain guide assembly (25; 125; 225; 325), which is connected to the movable element so as to be rotatable about an axis of rotation (A);
- an elastic energy storage device (44; 144; 244; 344), which is associated with the chain guide assembly and by means of which the chain guide assembly can be preloaded in a first direction of rotation relative to the movable element; and
- a counterforce generating device (38; 138; 238; 338), which comprises a freewheel clutch device (60; 160; 260; 360), a friction device (70; 170; 270; 370) and an elastic energy storage device (80; 180; 280; 380) associated with or belonging to the friction device and by means of which a counterforce counteracting a rotation in a second direction of rotation, counter to the first direction of rotation, relative to the movable element, can be exerted on the chain guide assembly;
wherein the freewheel clutch device has a roller clutch (60; 160; 260; 360) and the friction device (70; 170; 270; 370) has friction surfaces which are in mutual frictional engagement or can be brought into mutual frictional engagement, which are aligned substantially axially with respect to the axis of rotation (A) and which are preloaded or can be preloaded against one another by means of the elastic energy storage device associated with or belonging to the friction device;
**characterized**
**in that**, with reference to the axis of rotation (A), the friction surfaces are offset axially relative to rolling elements of the roller clutch which act between a radially inner clutch element and a radially outer clutch element of the roller clutch (60; 160; 260; 360).

2. Rear bicycle gear changer according to Claim 1, **characterized in that** a radial extension zone of the rolling elements overlaps with a radial extension zone of the friction surfaces.

3. Rear bicycle gear changer according to Claim 1 or 2, **characterized in that**, with reference to the axis of rotation, the friction surfaces are arranged in radial overlap with either the inner clutch element or the outer clutch element.

4. Rear bicycle gear changer according to one of Claims 1 to 3, **characterized in that** the chain guide assembly (25; 125; 225; 325) is connected to the movable element (16; 116; 216; 316) by means of a rotary shaft (50; 150; 250; 350), which is mounted in the movable element (16; 116; 216; 316) so as to be rotatable about the axis of rotation (A) and, if desired, forms the inner clutch element of the roller clutch (60; 160).

5. Rear bicycle gear changer according to Claim 4, **characterized in that** the rotary shaft (50; 150; 250; 350) is rotatably mounted in an aperture (66; 166; 266; 366), which is embodied in a stepped manner and embodied as a passage between opposite axial sides of the movable element, and is directly or indirectly supported axially with respect to at least one axial direction on an associated supporting formation of the movable element (16; 116; 216; 316) via at least one supporting formation that extends in a radial direction and is integral with the rotary shaft or is fixed thereon.

6. Rear bicycle gear changer according to Claim 5, **characterized in that**, with reference to a first axial direction, the rotary shaft is supported axially on the movable element (16; 116; 216; 316) by means of a supporting formation that is provided at a distance from the chain guide assembly and is integral with the rotary shaft (50; 1.50; 250; 350) or fixed thereon, the axial support being provided, if desired, via at least one supporting element (390) separate from the movable element and accommodated in the aperture (360).

7. Rear bicycle gear changer according to Claim 6, **characterized in that** the supporting formation, which is preferably embodied integrally with the rotary shaft, e.g. as a flange section, is provided in an axial end region of the rotary shaft remote from the chain guide assembly (125; 225; 325).

8. Rear bicycle gear changer according to one of Claims 5 to 7, **characterized in that** one element (28; 128; 328) of the chain guide assembly (25; 125; 325) serves as a supporting formation for the axial support of the rotary shaft (50; 150; 350) on the movable element (16; 116; 316) with respect to an axial direction, in particular with respect to a second axial direction opposite to the first axial direction.

9. Rear bicycle gear changer according to one of Claims 1 to 8, **characterized in that**, with reference to the axis of rotation (A), the friction surfaces are offset axially relative to at least one of the inner clutch element and the outer clutch element.

10. Rear bicycle gear changer according to one of Claims 1 to 9, **characterized in that** the friction surfaces comprise first friction surfaces, which can be preloaded against one another by means of the elastic energy storage device (44; 144; 244) associated with or belonging to the friction device, **in that** the friction surfaces comprise second friction surfaces, which are more closely adjacent to the chain guide assembly (25; 125; 225) than the first friction surfaces and which can be preloaded against one another by means of the elastic energy storage device (44; 144; 244) associated with or belonging to the friction device, and **in that**, with reference to the axis of rotation, the rolling elements of the roller clutch (60; 160; 260) are arranged axially between the first friction surfaces, on the one hand, and the second friction surfaces, on the other hand.

11. Rear bicycle gear changer according to Claim 10, **characterized in that** the energy storage device associated with or belonging to the friction device comprises a first elastic energy store and a second elastic energy store, wherein, with reference to the axis of rotation, the rolling elements of the roller clutch are arranged axially between the first energy store, on the one hand, and the second energy store, on the other hand.

12. Rear bicycle gear changer according to Claim 10, **characterized in that** the elastic energy storage device (44; 144) associated with or belonging to the friction device is arranged in close proximity to the first friction surfaces and acts on the second friction surfaces via a force transmission device (62, 64; 162, 164), or **in that** the elastic energy storage device (244) associated with or belonging to the friction device is arranged in close proximity to the second friction surfaces and acts on the first friction surface via a force transmission device (262, 264).

13. Rear bicycle gear changer according to Claim 12, **characterized in that** either the inner clutch element or the outer clutch element (262, 264) forms the force transmission device or belongs to said device and/or **in that** at least one supporting element (62, 64; 162, 164; 262, 264) separate from the inner clutch element and the outer clutch element and extending axially, radially to the inside or radially to the outside of the roller clutch, forms the force transmission device or belongs to said device.

14. Rear bicycle gear changer according to one of Claims 1 to 9, **characterized in that**, with reference to a reference plane intersecting the roller clutch (360) and orthogonal to the axis of rotation (A), the friction surfaces are arranged on one axial side of the reference plane, preferably axially offset relative to the rolling elements of the roller clutch (360), most preferably axially offset relative to the roller clutch (360).

15. Rear bicycle gear changer according to Claim 14, **characterized in that** the friction surfaces are arranged on the axial side of the reference plane closer to the chain guide assembly (325).

16. Rear bicycle gear changer according to Claim 14 or 15, **characterized in that** the elastic energy storage device (380) associated with or belonging to the friction device (370) is arranged in close proximity to the friction surfaces on the same axial side of the reference plane.

17. Rear bicycle gear changer according to one of Claims 1 to 16, **characterized by** at least one sleeve element (62, 64; 162, 164), which surrounds the roller clutch (60; 160) radially on the outside, is coupled or can be coupled to the outer clutch element for rotation in common and, if desired, serves as a supporting element of the force transmission device, and/or **characterized by** at least one sleeve element (262, 264; 362), which surrounds the rotary shaft (250, 350) radially, is coupled or can be coupled to the rotary shaft for rotation in common if desired and is surrounded radially on the outside by the roller clutch (260; 360) and, if desired, serves as a supporting element of the force transmission device or forms the inner clutch element of the roller clutch (260; 360).

18. Rear bicycle gear changer according to one of Claims 1 to 17, **characterized in that** one (262, 264) of the clutch elements of the roller clutch (260) or a/the sleeve element (62, 64; 162, 164; 262, 264; 362) surrounding the roller clutch (60; 160) or the rotary shaft (250) radially on the outside has an end section which forms a friction surface of the axially oriented friction surfaces or of the first or second friction surfaces and is preferably embodied as a flange section.

19. Rear bicycle gear changer according to Claim 18, **characterized in that** the sleeve element (362) surrounding the rotary shaft (360) radially on the outside is supported axially on a supporting formation of the rotary shaft (350) in an end section opposite to the end section forming the friction surface, wherein this supporting formation preferably also serves for the direct or indirect axial support of the rotary shaft (350) on the movable element (316).

20. Rear bicycle gear changer according to one of Claims 1 to 19, **characterized in that** at least one disc or annular disc (72, 74; 172, 174), which is fixed or can be fixed for conjoint rotation in the movable element (16; 116), and/or at least one inner surface of the movable element forms one friction surface of the axially oriented friction surfaces or of the first or second friction surfaces, or **in that** at least one disc or annular disc (272, 274; 374), which is coupled or can be coupled to the rotary shaft (250; 350) for rotation in common, and/or at least one surface of a radially projecting section of the rotary shaft forms one friction surface of the axially oriented friction surfaces or of the first or second friction surfaces.

21. Rear bicycle gear changer according to one of Claims 1 to 20, **characterized in that** the outer clutch element is coupled firmly for conjoint rotation or, via the friction surfaces, frictionally to the movable element (16; 116; 216; 316).

22. Rear bicycle gear changer according to one of Claims 1 to 21, **characterized in that** the rotary shaft (50; 150; 250; 350) forms the inner clutch element or is coupled firmly for conjoint rotation or, via the friction surfaces, frictionally to the inner clutch element, which is preferably formed by at least one sleeve element (262, 264; 362).

23. Rear bicycle gear changer according to one of Claims 1 to 22, **characterized in that** the outer clutch element is coupled frictionally to the movable element (16; 116) via the friction surfaces, and the rotary shaft (50; 150) forms the inner clutch element or is coupled firmly for conjoint rotation to the latter, or **in that** the outer clutch element is coupled firmly for conjoint rotation to the movable element (216; 316), and the rotary shaft (250; 350) is coupled frictionally to the inner clutch element via the friction surfaces.

24. Rear bicycle gear changer according to one of Claims 1 to 23, **characterized in that** a defined stress condition of the elastic energy storage device (44; 144; 244; 344) associated with or belonging to the friction device, which is preferably embodied as a corrugated spring or diaphragm spring arrangement, is set during the production of the bicycle gear changer by means of a supporting element, preferably in the form of an adjusting element embodied as a screw element (76; 176; 276; 376), for example, which can be positioned axially relative to at least one of the movable element and the rotary shaft, in a defined manner within a predetermined axial adjustment range, and can be supported axially.

25. Rear bicycle gear changer according to Claim 24, **characterized in that** the elastic energy storage device (80) associated with or belonging to the friction device is arranged axially between the chain guide assembly (25), on the one hand, and the supporting element (76), on the other hand, and, at the same time, is preferably arranged axially between the roller clutch (60), on the one hand, and the supporting element (76), on the other hand.

26. Rear bicycle gear changer according to Claim 24, **characterized in that** the supporting element (176; 276; 376) is arranged axially between the chain guide assembly (125; 225; 325), on the one hand, and the roller clutch (160; 260; 360), on the other hand.

27. Rear bicycle gear changer according to Claim 26, **characterized in that** the elastic energy storage device (180) associated with or belonging to the friction device is arranged axially between the roller clutch (160; 360), on the one hand, and the supporting element (176; 376), on the other hand.

28. Rear bicycle gear changer according to Claim 26, **characterized in that** the roller clutch (260) is arranged axially between the elastic energy storage device (280) associated with or belonging to the friction device, on the one hand, and the supporting element (276), on the other hand.

29. Rear bicycle gear changer according to one of Claims 24 to 28, **characterized in that** the supporting element is embodied as an adjusting element (76; 176; 276; 376) and is in engagement at an external thread with an internal thread of the movable element (16; 116) or at an internal thread with an external thread of the rotary shaft (250; 350).

30. Rear bicycle gear changer according to one of Claims 24 to 29, **characterized in that** the supporting element or adjusting element (16; 116; 216; 316) is secured against adjustment and/or concealed and is preferably arranged so as to be inaccessible.

31. Rear bicycle gear changer according to one of Claims 1 to 30, **characterized in that**, with reference to the axis of rotation (A), the elastic energy storage device (44; 144; 244; 344) associated with the chain guide assembly (25; 125; 225; 325) is arranged radially to the outside of a radial extension zone of the friction surfaces and so as to overlap axially with at least some of the friction surfaces, preferably the second friction surfaces, and/or with the supporting element or adjusting element (176; 276; 376) and/or with the elastic energy storage device (180; 380) associated with or belonging to the friction device and so as to surround this/these radially.

32. Preassembled unit for the manufacture of a rear bicycle gear changer (10) according to at least one of Claims 1 to 31, comprising:
- a movable element (16), which is coupled or can be coupled movably to a base element (12);
- a rotary shaft (50), which can be connected to a chain guide assembly (25) and is mounted so as to be rotatable about an axis of rotation (A) in an aperture (66) in the movable element, said aperture being embodied in a stepped manner and as a passage between opposite axial sides of the movable element, and is supported or can be supported axially in a first one of the axial directions by the movable element, if desired via at least one supporting element accommodated in the aperture;
- a freewheel clutch device (60) and a friction device (70), which are arranged in the aperture so as to surround the rotary shaft (50) radially and, if desired, so as to include the rotary shaft as a clutch element of the freewheel clutch device, and with which a counterforce generating device (38) can be formed, including an elastic energy storage device (80) associated with the friction device,
wherein the freewheel clutch device has a roller clutch (60), and the friction device (70) has friction surfaces which are in mutual frictional engagement or can be brought into mutual frictional engagement and are oriented substantially axially with reference to the axis of rotation (A) and which, with reference to the axis of rotation, are offset axially with respect to rolling elements of the roller clutch (60) that act between a radially inner clutch element and a radially outer clutch element of the roller clutch;
wherein the rotary shaft (50) can be connected at a first axial end to the chain guide assembly (25), preferably while achieving indirect axial support or capacity for support for the rotary shaft in a second axial direction opposite to the first axial direction, and the elastic energy storage device (80) can be positioned in the aperture in proximity to a second end, opposite to the first end, of the rotary shaft (50), and loaded by an adjusting element (76) which can be positioned in a defined manner in the aperture and fixed axially, e.g. an adjusting element which can be screwed by means of an external thread into an internal thread of the aperture, in order to load the friction surfaces into mutual frictional engagement.

33. Preassembled unit for the manufacture of a rear bicycle gear changer (110) according to at least one of Claims 1 to 31, comprising:
- a movable element (116), which is coupled or can be coupled movably to a base element and has an aperture (166), which is embodied in a stepped manner and embodied as a passage between axial sides of the movable element that are situated opposite one another with reference to an axis and in which a rotary shaft (150), which can be connected to a chain guide assembly (125), is mounted or can be mounted so as to be rotatable about an axis of rotation (A) corresponding to said axis and is supported or can be supported axially in a first one of the axial directions by the movable element, if desired via at least one supporting element accommodated in the aperture;
- a freewheel clutch device (160) or at least one component device of the freewheel clutch device (160) and a friction device (170) having an elastic energy storage device (180) associated with or belonging to the friction device, which are arranged in the aperture (166) while leaving free a passage, situated radially on the inside, for the rotary shaft (150), which is included or to be included, if desired, as a clutch element of the freewheel clutch device, and can be inserted or has been inserted into the aperture, in order to form a counterforce generating device (138),
wherein the freewheel clutch device or the component device has a roller clutch (160) or at least an outer clutch element of the roller clutch (160) with rolling elements held thereon radially on the inside, and the friction device (170) has friction surfaces which are in mutual frictional engagement or can be brought into mutual frictional engagement and are oriented substantially axially with reference to the axis of rotation (A), can be preloaded against one another by means of the elastic energy storage device (180) associated with or belonging to the friction device, wherein, with reference to the axis of rotation, the friction surfaces are offset axially with respect to rolling elements of the roller clutch (160) that act between a radially inner clutch element and a radially outer clutch element of the roller clutch;
wherein, in a first axial end region of the aperture (166), an adjusting element (176) having a passage associated with the rotary shaft is positioned in a defined manner and fixed axially in the aperture, being screwed by means of an external thread into an internal thread of the aperture for example, which adjusting element loads the elastic energy storage device (180) in order to load the friction surfaces into mutual frictional engagement; and
wherein the rotary shaft (250) can be inserted or is inserted into the aperture (166) from an end region of the aperture opposite to the first end region, and the inserted rotary shaft (250) can be connected at an end arranged in the first axial end region to the chain guide assembly (125), preferably while achieving indirect axial support or capacity for support for the rotary shaft in a second axial direction opposite to the first axial direction.

34. Rear bicycle gear changer according to at least one of Claims 1 to 31, preferably produced from a preassembled unit according to Claim 32 or 33, **characterized in that** the outer clutch element is coupled frictionally to the movable element (16; 116) by means of the friction surfaces in order to generate counterforces that counteract rotation of the outer element, and **in that** the/a rotary shaft (50; 150) forms the inner clutch element or is fixed to the latter for conjoint rotation.

35. Preassembled unit for the manufacture of a rear bicycle gear changer (210) according to at least one of Claims 1 to 31, comprising:
- a rotary shaft (250), which can be connected at a first end to a chain guide assembly (225) in order to mount the latter so as to be rotatable by means of the rotary shaft about an axis of rotation (A) in an aperture (266) in a movable element (210) coupled or capable of being coupled movably to a base element (212), said aperture being embodied in a stepped manner and forming a passage between opposite axial sides of the movable element;
- a freewheel clutch device (260) and a friction device (270) having an elastic energy storage device (280) associated with or belonging to the friction device, which are arranged on the rotary shaft (250) so as to surround the rotary shaft radially and, if desired, so as to include the rotary shaft as a clutch element of the freewheel clutch device, in order to form a counterforce generating device (238);
wherein the freewheel clutch device has a roller clutch (260), and the friction device (270) has friction surfaces which are in mutual frictional engagement or can be brought into mutual frictional engagement and are oriented substantially axially with reference to the axis of rotation (A) and can be preloaded against one another by means of the elastic energy storage device (280) associated with or belonging to the friction device, wherein, with reference to the axis of rotation (A), the friction surfaces are offset axially with respect to rolling elements of the roller clutch that act between a radially inner clutch element and a radially outer clutch element of the roller clutch;
wherein, in proximity to a first axial end of the rotary shaft (250), an adjusting element (276) is positioned in a defined manner and fixed axially on the rotary shaft, being screwed by means of an internal thread on an inner circumference onto an external thread of the rotary shaft (250) for example, which adjusting element loads the elastic energy storage device (250) in order to load the friction surfaces into mutual frictional engagement;
wherein the rotary shaft (250) can be connected at the first axial end to the chain guide assembly (225), and the rotary shaft (250) can be assembled to the movable element (216) by a procedure in which the rotary shaft (250) is inserted with a second end, opposite to the first end, in the lead into the aperture (266) from a first axial side of the movable element and is secured against being pulled out of the aperture (266) on the movable element (216), in an end region adjacent to the second end, from the second axial side, opposite to the first axial side, of the movable element.

36. Preassembled unit for the manufacture of a rear bicycle gear changer (310) according to at least one of Claims 1 to 31, comprising:
- a movable element (316), which is coupled or can be coupled movably to a base element and has an aperture (366), which is embodied in a stepped manner and embodied as a passage between axial sides of the movable element that are situated opposite one another with reference to an axis and in which a rotary shaft (350), which can be connected to a chain guide assembly (325), can be mounted so as to be rotatable about an axis of rotation (A) corresponding to said axis and is supported or can be supported axially in a first one of the axial directions by the movable element, if desired via at least one supporting element (390) accommodated in the aperture;
- a freewheel clutch device (360) and a friction device (370) having an elastic energy storage device (380) associated with or belonging to the friction device, which are arranged on the rotary shaft (350) so as to surround the rotary shaft radially and, if desired, so as to include the rotary shaft as a clutch element of the freewheel clutch device, in order to form a counterforce generating device (338),
wherein the freewheel clutch device has a roller clutch (360) and the friction device (370) has friction surfaces which are in mutual frictional engagement or can be brought into mutual frictional engagement and are oriented substantially axially with reference to the axis of rotation (A), can be preloaded against one another by means of the elastic energy storage device (380) associated with or belonging to the friction device, wherein, with reference to the axis of rotation (A), the friction surfaces are offset axially with respect to rolling elements of the roller clutch that act between a radially inner clutch element and a radially outer clutch element of the roller clutch;
wherein, in proximity to a first axial end of the rotary shaft (350), an adjusting element (376) is positioned in a defined manner and fixed axially on the rotary shaft, being screwed by means of an internal thread on an inner circumference onto an external thread of the rotary shaft (350) for example, which adjusting element loads the elastic energy storage device (350) in order to load the friction surfaces into mutual frictional engagement;
wherein the rotary shaft (350) can be connected at the first axial end to the chain guide assembly (25), preferably while achieving indirect axial support or capacity for support for the rotary shaft in a second axial direction opposite to the first axial direction.

37. Rear bicycle gear changer according to one of Claims 1 to 31, preferably produced from a preassembled unit according to Claim 35 or 36, **characterized in that** the outer clutch element is fixed for conjoint rotation in relation to the movable element (216; 316), preferably on the basis of a positive-locking joint, and **in that** the/a rotary shaft (250; 350) is coupled frictionally to the inner clutch element by means of the friction surfaces in order to transmit rotary driving forces.

38. Rear bicycle gear changer according to at least one of Claims 1 to 31 or according to Claim 37, preferably produced from a preassembled unit according to Claim 35, **characterized in that** the rotary shaft (250) is secured against being pulled out of the aperture (266) on the movable element (216) by means of a, preferably releasable, holding means (280), e.g. by means of a snap ring (280), which supports the rotary shaft axially in a first one of the axial directions on the movable element (216), if desired via at least one supporting element accommodated in the aperture.

39. Rear bicycle gear changer according to Claim 37 or 38, **characterized in that** the rotary shaft (250; 350) is supported or can be supported within the aperture on the movable element (216; 316) in a second axial direction, opposite to the first axial direction, via the chain guide assembly (225; 325) and/or via a stop on the rotary shaft (250).

40. Method for producing a rear bicycle gear changer according to one of Claims 1 to 31 or according to one of Claims 24, and 37 to 39, comprising:
- producing a preassembled unit according to one of Claims 32, 33, 35 and 36;
- combining the preassembled unit with missing components to form the bicycle gear changer (10; 110; 210; 310).

## Revendications

1. Dérailleur arrière de vélo, comprenant:
- un élément de base (12; 212), qui peut être monté sur un cadre de vélo en association avec une roue arrière de vélo du vélo;
- un élément mobile (16; 116; 216; 312), qui est couplé de façon mobile avec l'élément de base;
- un module de guidage de chaîne (25; 125; 225; 325), qui est relié à l'élément mobile de façon rotative autour d'un axe de rotation (A);
- un dispositif élastique d'accumulation de force (44; 144; 244; 344) associé au module de guidage de chaîne, au moyen duquel le module de guidage de chaîne peut être précontraint dans un premier sens de rotation par rapport à l'élément mobile; et
- un dispositif de production de force antagoniste (38; 138; 238; 338), qui comprend un dispositif de couplage à roue libre (60; 160; 260; 360) ainsi qu'un dispositif de friction (70; 170; 270; 370) et un dispositif élastique d'accumulation de force (80; 180; 280; 380) associé ou appartenant au dispositif de friction et au moyen duquel une force antagoniste s'opposant à une rotation dans un deuxième sens de rotation par rapport à l'élément mobile opposé au premier sens de rotation peut être exercée sur le module de guidage de chaîne;
dans lequel le dispositif de couplage à roue libre présente un couplage à rouleaux (60; 160; 260; 360) et le dispositif de friction (70; 170; 270; 370) présente des surfaces de friction orientées essentiellement en direction axiale par rapport à l'axe de rotation (A), qui se trouvent en prise de friction mutuelle ou qui peuvent être mises en prise de friction mutuelle, qui sont ou peuvent être précontraintes contre l'autre au moyen du dispositif élastique d'accumulation de force associé ou appartenant au dispositif de friction; **caractérisé en ce que** les surfaces de friction sont décalées axialement par rapport à l'axe de rotation (A), par rapport à des éléments roulants du couplage à rouleaux opérant entre un élément de couplage radialement intérieur et un élément de couplage radialement extérieur du couplage à rouleaux (60; 160; 260; 360).

2. Dérailleur arrière de vélo selon la revendication 1, **caractérisé en ce qu'**une région d'extension radiale des éléments roulants se trouve en recouvrement avec une région d'extension radiale des surfaces de friction.

3. Dérailleur arrière de vélo selon la revendication 1 ou 2, **caractérisé en ce que** les surfaces de friction sont disposées en recouvrement radial, par rapport à l'axe de rotation, avec un de l'élément de couplage intérieur et de l'élément de couplage extérieur.

4. Dérailleur arrière de vélo selon l'une quelconque des revendications 1 à 3, **caractérisé en ce que** le module de guidage de chaîne (25; 125; 225; 325) est relié à l'élément mobile (16; 116; 216; 316) au moyen d'un arbre de rotation (50; 150; 250; 350) supporté dans l'élément mobile (16; 116; 216; 316) de façon rotative autour de l'axe de rotation (A) et formant, si on le désire, l'élément de couplage intérieur du couplage à rouleaux (60; 160).

5. Dérailleur arrière de vélo selon la revendication 4, **caractérisé en ce que** l'arbre de rotation (50; 150; 250; 350) est supporté de façon rotative dans un évidement (66; 166; 266; 366) de forme étagée, réalisé comme passage entre des côtés axiaux opposés de l'élément mobile et est supporté axialement par rapport à au moins une direction axiale, directement ou indirectement sur une formation de support associée de l'élément mobile (16; 116; 216; 316) au moyen d'au moins une formation de support s'étendant en direction radiale, formée d'une seule pièce avec l'arbre de rotation ou fixée à celui-ci.

6. Dérailleur arrière de vélo selon la revendication 5, **caractérisé en ce que** l'arbre de rotation est supporté axialement, par rapport à une première direction axiale, sur l'élément mobile (16; 116; 216; 316) au moyen d'une formation de support prévue à distance du module de guidage de chaîne, formée d'une seule pièce avec l'arbre de rotation (50; 150; 250; 350) ou fixée à celui-ci, si on le désire au moyen d'au moins un élément de support (390) logé dans l'évidement (360) et séparé par rapport à l'élément mobile.

7. Dérailleur arrière de vélo selon la revendication 6, **caractérisé en ce que** la formation de support formée de préférence d'une seule pièce avec l'arbre de rotation, par exemple sous la forme d'une partie d'aile, est prévue dans une région d'extrémité axiale de l'arbre de rotation éloignée du module de guidage de chaîne (125; 225; 325).

8. Dérailleur arrière de vélo selon l'une quelconque des revendications 5 à 7, **caractérisé en ce qu'**un élément (28; 128; 328) du module de guidage de chaîne (25; 125; 325) sert de formation de support pour le support axial de l'arbre de rotation (50; 150; 350) sur l'élément mobile (16; 116; 316) par rapport à une direction axiale, en particulier par rapport à une deuxième direction axiale opposée à la première direction axiale.

9. Dérailleur arrière de vélo selon l'une quelconque des revendications 1 à 8, **caractérisé en ce que** les surfaces de friction sont décalées axialement, par rapport à l'axe de rotation (A), par rapport à au moins un de l'élément de couplage intérieur et de l'élément de couplage extérieur.

10. Dérailleur arrière de vélo selon l'une quelconque des revendications 1 à 9, **caractérisé en ce que** les surfaces de friction comprennent des premières surfaces de friction, qui peuvent être précontraintes l'une contre l'autre au moyen du dispositif élastique d'accumulation de force (44; 144; 244) associé ou appartenant au dispositif de friction, **en ce que** les surfaces de friction comprennent des deuxièmes surfaces de friction plus proches du module de guidage de chaîne (25; 125; 225) par rapport aux premières surfaces de friction et qui peuvent être précontraintes l'une contre l'autre au moyen du dispositif élastique d'accumulation de force (44; 144; 244) associé ou appartenant au dispositif de friction, et **en ce que** les éléments roulants du couplage à rouleaux (60; 160; 260) sont disposés axialement, par rapport à l'axe de rotation, entre d'une part les premières surfaces de friction et d'autre part les deuxièmes surfaces de friction.

11. Dérailleur arrière de vélo selon la revendication 10, **caractérisé en ce que** le dispositif d'accumulation de force associé ou appartenant au dispositif de friction comprend un premier accumulateur de force élastique et un deuxième accumulateur de force élastique, dans lequel les éléments roulants du couplage à rouleaux sont disposés axialement, par rapport à l'axe de rotation, entre d'une part le premier accumulateur de force et d'autre part le deuxième accumulateur de force.

12. Dérailleur arrière de vélo selon la revendication 10, **caractérisé en ce que** le dispositif élastique d'accumulation de force (44; 144) associé ou appartenant au dispositif de friction est disposé à proximité étroite des premières surfaces de friction et agit au moyen d'un dispositif de transmission de force (62, 64; 162, 164) sur les deuxièmes surfaces de friction, ou **en ce que** le dispositif élastique d'accumulation de force associé ou appartenant au dispositif de friction (244) est disposé à proximité étroite des deuxièmes surfaces de friction et agit au moyen d'un dispositif de transmission de force (262, 264) sur les premières surfaces de friction.

13. Dérailleur arrière de vélo selon la revendication 12, **caractérisé en ce qu'**un de l'élément de couplage intérieur et de l'élément de couplage extérieur (262, 264) forme le dispositif de transmission de force ou fait partie de celui-ci ou/et **en ce qu'**au moins un élément de support (62, 64; 162, 164; 262, 264) s'étendant radialement à l'intérieur ou radialement à l'extérieur du couplage à rouleaux et séparé par rapport à l'élément de couplage intérieur et à l'élément de couplage extérieur forme le dispositif de transmission de force ou fait partie de celui-ci.

14. Dérailleur arrière de vélo selon l'une quelconque des revendications 1 à 9, **caractérisé en ce que** les surfaces de friction sont disposées, par rapport à un plan de référence orthogonal à l'axe de rotation (A) et coupant le couplage à rouleaux (360), sur un côté axial du plan de référence, de préférence en décalage axial par rapport aux éléments roulants du couplage à rouleaux (360), et de préférence encore en décalage axial par rapport au couplage à rouleaux (360).

15. Dérailleur arrière de vélo selon la revendication 14, **caractérisé en ce que** les surfaces de friction sont disposées sur le côté axial du plan de référence plus proche du module de guidage de chaîne (325).

16. Dérailleur arrière de vélo selon la revendication 14 ou 15, **caractérisé en ce que** le dispositif élastique d'accumulation de force (380) associé ou appartenant au dispositif de friction (370) est disposé à proximité étroite des surfaces de friction sur le même côté axial du plan de référence.

17. Dérailleur arrière de vélo selon l'une quelconque des revendications 1 à 16, **caractérisé par** au moins un élément de douille (62, 64; 162, 164) entourant radialement à l'extérieur le couplage à rouleaux (60; 160), qui est ou peut être couplé à l'élément de couplage extérieur pour une rotation commune et formant si on le désire l'élément de support du dispositif de transmission de force ou/et **caractérisé par** au moins un élément de douille (262, 264; 362) entourant radialement l'arbre de rotation (250, 350), qui est ou peut être couplé avec l'arbre de rotation si on le désire pour une rotation commune, qui est entouré radialement à l'extérieur par le couplage à rouleaux (260; 360) et qui sert, si on le désire, comme élément de support du dispositif de transmission de force ou qui forme l'élément de couplage intérieur du couplage à rouleaux (260; 360).

18. Dérailleur arrière de vélo selon l'une quelconque des revendications 1 à 17, **caractérisé en ce qu'**un (262, 264) des éléments de couplage du couplage à rouleaux (260) ou un/l'élément de douille (62, 64; 162, 164; 262, 264; 362) entourant radialement à l'extérieur le couplage à rouleaux (60; 160) ou l'arbre de rotation (250) présente une partie d'extrémité formant une surface de friction des surfaces de friction orientées axialement ou des premières ou des deuxièmes surfaces de friction, et réalisée de préférence en forme d'aile.

19. Dérailleur arrière de vélo selon la revendication 18, **caractérisé en ce que** l'élément de douille (362) entourant radialement à l'extérieur l'arbre de rotation (360) est supporté axialement sur une formation de support de l'arbre de rotation (350) à une partie d'extrémité opposée à la partie d'extrémité formant la surface de friction, dans lequel cette formation de support sert de préférence aussi pour le support axial direct ou indirect de l'arbre de rotation (350) sur l'élément mobile (316).

20. Dérailleur arrière de vélo selon l'une quelconque des revendications 1 à 19, **caractérisé en ce qu'**au moins une rondelle ou une rondelle annulaire (72, 74; 172, 174) qui est ou peut être fixée dans l'élément mobile (16; 116) ou/et au moins une surface intérieure de l'élément mobile forme une surface de friction des surfaces de friction orientées axialement ou des premières ou deuxièmes surfaces de friction ou **en ce qu'**au moins une rondelle ou une rondelle annulaire (272, 274; 374) qui est ou peut être couplée avec l'arbre de rotation (250; 350) en vue d'une rotation commune ou/et au moins une surface d'une partie radialement saillante de l'arbre de rotation forme une surface de friction des surfaces de friction orientées axialement ou des premières ou des deuxièmes surfaces de friction.

21. Dérailleur arrière de vélo selon l'une quelconque des revendications 1 à 20, **caractérisé en ce que** l'élément de couplage extérieur est couplé avec l'élément mobile (16; 116; 216; 316) de façon solidaire en rotation ou par friction au moyen des surfaces de friction.

22. Dérailleur arrière de vélo selon l'une quelconque des revendications 1 à 21, **caractérisé en ce que** l'arbre de rotation (50; 150; 250; 350) forme l'élément de couplage intérieur ou est couplé, de façon solidaire en rotation ou par friction au moyen des surfaces de friction, avec l'élément de couplage intérieur formé de préférence par au moins un élément de douille (262, 264; 362).

23. Dérailleur arrière de vélo selon l'une quelconque des revendications 1 à 22, **caractérisé en ce que** l'élément de couplage extérieur est couplé à l'élément mobile (16; 116) par friction au moyen des surfaces de friction et l'arbre de rotation (50; 150) forme l'élément de couplage intérieur ou est couplé avec celui-ci de façon solidaire en rotation ou **en ce que** l'élément de couplage extérieur est couplé avec l'élément mobile (216; 316) de façon solidaire en rotation et l'arbre de rotation (250; 350) est couplé à l'élément de couplage intérieur par friction au moyen des surfaces de friction.

24. Dérailleur arrière de vélo selon l'une quelconque des revendications 1 à 23, **caractérisé en ce qu'**un état de contrainte défini du dispositif élastique d'accumulation de force (44; 144; 244; 344) associé ou appartenant au dispositif de friction, réalisé de préférence sous forme d'agencement de rondelle ondulée ou de rondelle élastique, est réglé, lors de la fabrication du dérailleur de vélo, au moyen d'un élément de support pouvant être supporté axialement et pouvant être positionné axialement par rapport à au moins un de l'élément mobile et de l'arbre de rotation de façon définie à l'intérieur d'une région de réglage axiale prédéterminée, de préférence sous la forme d'un élément de réglage réalisé par exemple en forme d'élément de vis (76; 176; 276; 376).

25. Dérailleur arrière de vélo selon la revendication 24, **caractérisé en ce que** le dispositif élastique d'accumulation de force (80) associé ou appartenant au dispositif de friction est disposé axialement entre d'une part le module de guidage de chaîne (25) et d'autre part l'élément de support (76), et en l'occurrence de préférence axialement entre d'une part le couplage à rouleaux (60) et d'autre part l'élément de support (76).

26. Dérailleur arrière de vélo selon la revendication 24, **caractérisé en ce que** l'élément de support (176; 276; 376) est disposé axialement entre d'une part le module de guidage de chaîne (125; 225; 325) et d'autre part le couplage à rouleaux (160; 260; 360).

27. Dérailleur arrière de vélo selon la revendication 26, **caractérisé en ce que** le dispositif élastique d'accumulation de force (180) associé ou appartenant au dispositif de friction est disposé axialement entre d'une part le couplage à rouleaux (160; 360) et d'autre part l'élément de support (176; 376).

28. Dérailleur arrière de vélo selon la revendication 26, **caractérisé en ce que** le couplage à rouleaux (260) est disposé axialement entre d'une part le dispositif d'accumulation de force (280) associé ou appartenant au dispositif de friction et d'autre part l'élément de support (276).

29. Dérailleur arrière de vélo selon l'une quelconque des revendications 24 à 28, **caractérisé en ce que** l'élément de support est réalisé en forme d'élément de réglage (76; 176; 276; 376) et il est en prise par un filet extérieur avec un filet intérieur de l'élément mobile (16; 116) ou par un filet intérieur avec un filet extérieur de l'arbre de rotation (250; 350).

30. Dérailleur arrière de vélo selon l'une quelconque des revendications 24 à 29, **caractérisé en ce que** l'élément de support ou l'élément de réglage (16; 116; 216; 316) est calé et/ou dissimulé contre un déplacement et il est de préférence disposé de façon inaccessible.

31. Dérailleur arrière de vélo selon l'une quelconque des revendications 1 à 30, **caractérisé en ce que** le dispositif élastique d'accumulation de force (44; 144; 244; 344) associé au module de guidage de chaîne (25; 125; 225; 325) est disposé, par rapport à l'axe de rotation (A), radialement à l'extérieur d'une région d'extension radiale des surfaces de friction et en recouvrement axial avec au moins certaines des surfaces de friction, de préférence les deuxièmes surfaces de friction, ou/et avec l'élément de support ou l'élément de réglage (176; 276; 376) ou/et avec le dispositif d'accumulation de force (180; 380) associé ou appartenant au dispositif de friction et en entourant celui-ci ou celles-ci radialement.

32. Unité de pré-montage pour la fabrication d'un dérailleur arrière de vélo (10) selon l'une quelconque des revendications 1 à 31, comprenant:
- un élément mobile (16), qui est ou peut être couplé de façon mobile avec un élément de base (12);
- un arbre de rotation (50), qui peut être relié à un module de guidage de chaîne (25) et qui est supporté de façon rotative autour d'un axe de rotation (A) dans un évidement (66) de l'élément mobile de forme étagée, réalisé comme passage entre des côtés axiaux opposés de l'élément mobile et qui est ou peut être supporté axialement dans une première des directions axiales à travers l'élément mobile, si on le désire avec interposition d'au moins un élément de support logé dans l'évidement;
- un dispositif de couplage à roue libre (60) et un dispositif de friction (70), qui sont disposés dans l'évidement en entourant radialement l'arbre de rotation (50) et si on le désire utilisant l'arbre de rotation comme élément de couplage du dispositif de couplage à roue libre et avec lesquels, en utilisant un dispositif élastique d'accumulation de force (80) associé au dispositif de friction, on peut former un dispositif de production de force antagoniste (38), dans lequel le dispositif de couplage à roue libre présente un couplage à rouleaux (60) et le dispositif de friction (70) présente des surfaces de friction orientées essentiellement axialement par rapport à l'axe de rotation (A), qui sont ou peuvent être mises en prise de friction mutuelle, et qui, par rapport à l'axe de rotation, sont décalées axialement par rapport à des éléments roulants du couplage à rouleaux (60) opérant entre un élément de couplage radialement intérieur et un élément de couplage radialement extérieur du couplage à rouleaux;
dans lequel l'arbre de rotation (50) peut être relié par une première extrémité axiale au module de guidage de chaîne (25), de préférence en fournissant un support ou un support possible axial indirect pour l'arbre de rotation dans une deuxième direction axiale opposée à la première direction axiale et le dispositif élastique d'accumulation de force (80) peut être positionné dans l'évidement, à proximité d'une deuxième extrémité de l'arbre de rotation (50) opposée à la première extrémité, et serré par un élément de réglage (76) pouvant être positionné de façon définie dans l'évidement et pouvant être fixé axialement, par exemple avec un filet extérieur dans un filet intérieur de l'évidement, afin de serrer les surfaces de friction dans la prise de friction mutuelle.

33. Unité de pré-montage pour la fabrication d'un dérailleur arrière de vélo (110) selon au moins une des revendications 1 à 31, comprenant:
- un élément mobile (116), qui est ou peut être couplé de façon mobile avec un élément de base et qui présente un évidement de forme étagée (166), qui est réalisé comme passage entre des côtés axiaux, opposés par rapport à un axe, de l'élément mobile et dans lequel un arbre de rotation (150) pouvant être relié à un module de guidage de chaîne (125) est ou peut être supporté de façon rotative autour d'un axe de rotation (A) correspondant à l'axe et est ou peut être supporté axialement dans une première des directions axiales à travers l'élément mobile, si on le désire avec interposition d'au moins un élément de support logé dans l'évidement;
- un dispositif de couplage à roue libre (160) ou au moins un dispositif partiel d'un dispositif de couplage à roue libre (160) ainsi qu'un dispositif de friction (170) avec un dispositif élastique d'accumulation de force (180) associé ou appartenant au dispositif de friction, qui sont disposés dans l'évidement (166) en laissant libre un passage situé radialement à l'intérieur pour l'arbre de rotation (150) à introduire ou introduit dans l'évidement, à utiliser ou utilisé si on le désire comme élément de couplage du dispositif de couplage à roue libre, afin de former un dispositif de production de force antagoniste (138),
dans lequel le dispositif de couplage à roue libre ou le dispositif partiel comprend un couplage à rouleaux (160) ou au moins un élément de couplage extérieur du couplage à rouleaux (160) avec des éléments roulants maintenus intérieurement sur celui-ci et le dispositif de friction (170) présente des surfaces de friction orientées essentiellement axialement, par rapport à l'axe de rotation (A), qui sont en prise de friction mutuelle ou qui peuvent être mises en prise de friction mutuelle, et qui peuvent être précontraintes l'une contre l'autre au moyen du dispositif élastique d'accumulation de force (180) associé ou appartenant au dispositif de friction, dans lequel les surfaces de friction sont décalées axialement par rapport à l'axe de rotation par rapport à des éléments roulants du couplage à rouleaux (160) opérant entre un élément de couplage radialement intérieur et un élément de couplage radialement extérieur du couplage à rouleaux;
dans lequel un élément de réglage (176) présentant un passage associé à l'arbre de rotation est positionné de façon définie et est fixé axialement dans l'évidement, dans une première région d'extrémité axiale de l'évidement (166), par exemple est vissé avec un filet extérieur dans un filet intérieur de l'évidement, qui serre le dispositif élastique d'accumulation de force (180) afin de serrer les surfaces de friction dans la prise de friction mutuelle; et
dans lequel l'arbre de rotation (250) peut être ou est introduit dans l'évidement (166) à partir d'une région d'extrémité de l'évidement opposée à la première région d'extrémité dans celui-ci et l'arbre de rotation introduit (250) peut être relié, à une extrémité disposée dans la première région d'extrémité axiale, avec le module de guidage de chaîne (125), de préférence en produisant un support ou un support possible axial indirect pour l'arbre de rotation dans une deuxième direction axiale opposée à la première direction axiale.

34. Dérailleur arrière de vélo selon au moins une des revendications 1 à 31, de préférence fabriqué à partir d'une unité de pré-montage selon la revendication 32 ou 33, **caractérisé en ce que** l'élément de couplage extérieur est couplé à l'élément mobile (16; 116) par friction au moyen des surfaces de friction, pour la production de forces antagonistes s'opposant à une rotation de l'élément extérieur, et **en ce que** le/un arbre de rotation (50; 150) forme l'élément de couplage intérieur ou est solidaire en rotation de celui-ci.

35. Unité de pré-montage pour la fabrication d'un dérailleur arrière de vélo (210) selon au moins une des revendications 1 à 31, comprenant:
- un arbre de rotation (250), qui peut être relié par une première extrémité à un module de guidage de chaîne (225), afin de supporter celui-ci au moyen de l'arbre de rotation de façon rotative autour d'un axe de rotation (A) dans un évidement (266) de forme étagée, formant un passage entre des côtés opposés d'un élément mobile (210), l'évidement étant formé dans l'élément mobile qui est ou peut être couplé de façon mobile avec un élément de base (212) ;
- un dispositif de couplage à roue libre (260) et un dispositif de friction (270) avec un dispositif élastique d'accumulation de force (280) associé ou appartenant au dispositif de friction, qui sont disposés sur le dispositif de couplage à roue libre en entourant radialement l'arbre de rotation (250) et si on le désire en utilisant l'arbre de rotation comme élément de couplage du dispositif de couplage à roue libre, afin de former un dispositif de production de force antagoniste (238),
dans lequel le dispositif de couplage à roue libre présente un couplage à rouleaux (260) et le dispositif de friction (270) présente des surfaces de friction orientées essentiellement axialement par rapport à l'axe de rotation (A), qui sont en prise de friction mutuelle ou qui peuvent être mises en prise de friction mutuelle, qui peuvent être précontraintes l'une contre l'autre au moyen du dispositif élastique d'accumulation de force (280) associé ou appartenant au dispositif de friction, dans lequel les surfaces de friction sont décalées axialement par rapport à l'axe de rotation (A) par rapport à des éléments roulants du couplage à rouleaux opérant entre un élément de couplage radialement intérieur et un élément de couplage radialement extérieur du couplage à rouleaux;
dans lequel un élément de réglage (276) est positionné de façon définie et fixé axialement sur l'arbre de rotation à proximité d'une première extrémité axiale de l'arbre de rotation (250), par exemple est vissé avec un filet intérieur à une périphérie intérieure sur un filet extérieur de l'arbre de rotation (250), qui serre le dispositif élastique d'accumulation de force (250) afin de serrer les surfaces de friction dans la prise de friction mutuelle;
dans lequel l'arbre de rotation (250) peut être relié par la première extrémité axiale avec le module de guidage de chaîne (225) et l'arbre de rotation (250) peut être réuni à l'élément mobile (216), du fait que l'arbre de rotation (250) est introduit dans l'évidement (266) avec une deuxième extrémité en avant opposée à la première extrémité à partir d'un premier côté axial de l'élément mobile et est bloqué sur l'élément mobile contre une extraction hors de l'évidement (266) à une région d'extrémité proche de la deuxième extrémité à partir du deuxième côté axial de l'élément mobile (216) opposé au premier côté axial.

36. Unité de pré-montage pour la fabrication d'un dérailleur arrière de vélo (310) selon au moins une des revendications 1 à 31, comprenant:
- un élément mobile (316), qui est ou peut être couplé de façon mobile avec un élément de base et qui présente un évidement de formée étagée (366), qui est réalisé comme passage entre des côtés axiaux opposés, par rapport à un axe, de l'élément mobile et dans lequel un arbre de rotation (350) pouvant être relié à un module de guidage de chaîne (325) est supporté de façon rotative autour d'un axe de rotation (A) correspondant à l'axe et est ou peut être supporté axialement dans une première des directions axiales à travers l'élément mobile, si on le désire avec interposition d'au moins un élément de support (390) logé dans l'évidement;
- un dispositif de couplage à roue libre (360) et un dispositif de friction (370) avec un dispositif élastique d'accumulation de force (380) associé ou appartenant au dispositif de friction, qui sont disposés, en entourant radialement l'arbre de rotation (350) et en utilisant si on le désire l'arbre de rotation comme élément de couplage du dispositif de couplage à roue libre, sur celui-ci afin de former un dispositif de production de force antagoniste (338),
dans lequel le dispositif de couplage à roue libre présente un couplage à rouleaux (360) et le dispositif de friction (370) présente des surfaces de friction orientées essentiellement axialement par rapport à l'axe de rotation (A), qui sont en prise de friction mutuelle ou qui peuvent être mises en prise de friction mutuelle, qui peuvent être précontraintes l'une contre l'autre au moyen du dispositif élastique d'accumulation de force (380) associé ou appartenant au dispositif de friction, dans lequel les surfaces de friction sont décalées axialement par rapport à l'axe de rotation (A) par rapport à des éléments roulants du couplage à rouleaux opérant entre un élément de couplage radialement intérieur et un élément de couplage radialement extérieur du couplage à rouleaux;
dans lequel un élément de réglage (376) est positionné de façon définie et fixé axialement sur l'arbre de rotation à proximité d'une première extrémité axiale de l'arbre de rotation (350), par exemple est vissé avec un filet intérieur à une périphérie intérieure sur un filet extérieur de l'arbre de rotation (350), qui serre le dispositif élastique d'accumulation de force (350), afin de serrer les surfaces de friction dans la prise de friction mutuelle;
dans lequel l'arbre de rotation (350) peut être relié par la première extrémité axiale avec le module de guidage de chaîne (25), de préférence en fournissant un support ou un support possible axial indirect pour l'arbre de rotation dans une deuxième direction axiale opposée à la première direction axiale.

37. Dérailleur arrière de vélo selon l'une quelconque des revendications 1 à 31, de préférence fabriqué à partir d'une unité de pré-montage selon la revendication 35 ou 36, **caractérisé en ce que** l'élément de couplage extérieur est solidaire en rotation de l'élément mobile (216; 316), de préférence en raison d'un assemblage par emboîtement, et **en ce que** le/un arbre de rotation (250; 350) est couplé par friction au moyen des surfaces de friction avec l'élément de couplage intérieur pour la transmission de forces d'entraînement en rotation.

38. Dérailleur arrière de vélo selon au moins une des revendications 1 à 31 ou selon la revendication 37, de préférence fabriqué à partir d'une unité de pré-montage selon la revendication 35, **caractérisé en ce que** l'arbre de rotation (250) est bloqué sur l'élément mobile (216) contre une extraction hors de l'évidement (266) au moyen d'un élément de maintien de préférence amovible (280), par exemple au moyen d'un circlips (280), qui supporte axialement l'arbre de rotation sur l'élément mobile (216) dans une première des directions axiales, si on le désire avec interposition d'au moins un élément de support logé dans l'évidement.

39. Dérailleur arrière de vélo selon la revendication 37 ou 38, **caractérisé en ce que** l'arbre de rotation (250; 350) est ou peut être supporté sur l'élément mobile (216 ; 316) dans une deuxième direction axiale opposée à la première direction axiale au moyen du module de guidage de chaîne (225; 325) ou/et au moyen d'une butée de l'arbre de rotation (250) à l'intérieur de l'évidement.

40. Procédé de fabrication d'un dérailleur arrière de vélo selon l'une quelconque des revendications 1 à 31 ou selon l'une quelconque des revendications 24, 37 à 39, comprenant les étapes suivantes:
- fabrication d'une unité de pré-montage selon l'une quelconque des revendications 32, 33, 35 et 36;
- combiner l'unité de pré-montage avec des composants manquants pour former le dérailleur de vélo (10; 110; 210; 310).
